# EUROPEAN PATENT SPECIFICATION

(11) **EP 2 923 282 B1**
(45) Date of publication and mention of the grant of the patent: **08.01.2020**
(21) Application number: 13856127.9
(22) Date of filing: 01.11.2013
(51) Int. Cl.: G06F 16/00

(54) **SEGMENTED GRAPHICAL REVIEW SYSTEM AND METHOD**
SYSTEM UND VERFAHREN FÜR SEGMENTIERTE GRAFISCHE REVISION
SYSTÈME ET PROCÉDÉ D'EXAMEN GRAPHIQUE SEGMENTÉ

(30) Priority: 21.11.2012 US 201261729310 P; 11.09.2013 US 201314024369
(43) Date of publication of application: 30.09.2015
(73) Proprietor: Open Text Holdings, Inc., San Mateo, CA 94403 (US)
(72) Inventor: ANGARITA, Roger, Pasadena, CA 91106 (US); MCCREIGHT, Shawn, Pasadena, CA 91106 (US)
(74) Representative: Betten & Resch
(86) International application number: PCT/US2013/068174
(87) International publication number: WO 2014/081549

(56) References cited:
- US-A1- 2011 238 639
- US-A1- 2012 226 559
- US-B1- 7 814 078
- US-B1- 8 185 507
- US-B1- 8 290 918
- US-B2- 8 266 179
- Austin T. Clements ET AL: "Arpeggio: Metadata Searching and Content Sharing with Chord" In: "Advances in Communication Networking : 20th EUNICE/IFIP EG 6.2, 6.6 International Workshop, Rennes, France, September 1-5, 2014, Revised Selected Papers", 5 September 2005 (2005-09-05), SPRINGER VERLAG, DE 032548, XP055223613, ISSN: 0302-9743 ISBN: 978-3-642-36699-4 vol. 3640, pages 58-68, DOI: 10.1007/11558989_6, * page 3, paragraph 2 - page 10, paragraph 1 *
- Lei Li ET AL: "Exploring Interaction Between Images and Texts for Web Image Categorization", , 7 August 2011 (2011-08-07), XP055223659, Retrieved from the Internet: URL:http://www.purdue.edu/discoverypark/va ccine/assets/pdfs/publications/pdf/Explori ng Interaction Between Images and Texts for Web.pdf [retrieved on 2015-10-26]
- Lei Li ET AL: "Exploring Interaction Between Images and Texts for Web Image Categorization", , 7 August 2011 (2011-08-07), XP55223659, Retrieved from the Internet: URL:http://www.purdue.edu/discoverypark/va ccine/assets/pdfs/publications/pdf/Explori ng Interaction Between Images and Texts for Web.pdf [retrieved on 2015-10-26]

## Description

Throughout the description, the disclosure of embodiments is established merely by way of example and not the claimed scope of the invention.

### BACKGROUND

Embodiments of the present invention relate to the field of electronic item processing and review.

In the context of civil litigation, documents and other evidence are exchanged and reviewed by the parties in a process known as discovery. Similarly, in the context of other transactions between parties (e.g., mergers and acquisitions, investments, and significant loans), some parties may conduct due diligence on the records of other parties. The review phase typically consists of a team of examiners such as attorneys reading the text of a set of items such as email messages, source code, and documents (such as contracts and memos that may relate to a legal matter or a business transaction). These examiners may classify these items based on characteristics such as relevance, privilege, and confidentiality.

Electronic and computer-based systems are often used to manage the reviewing process by electronically storing items and allowing examiners to review the items on an item-by-item or a page-by-page basis and to tag the items or pages in accordance with tags as customized by the examiners.

The scientific paper - Austin T. Clements ET AL: "Arpeggio: Metadata Searching and Content Sharing with Chord" in "Advances in Communication Networking: 20th EUNICE/IFIP EG 6.2, 6.6 International Workshop , Rennes, France, September 1-5, 2014 Revised Selected Papers", 5 September 2005, SPRINGER VERLAG DE 032548 - discloses a peer to peer file sharing network introducing index gateways as a technique for minimizing index maintenance overhead. Arpeggio discloses segmenting all files into a sequence of chunks for the purposes of content distribution.

US patent application publication US 2012/0226559 relates to an automatic classification of consumers into micro-segments as a third party system.

The scientific paper - Lei Li ET AL "Exploring Interaction Between Images and Texts for Web Image Categorization", 7 August 2011 - discloses two approaches to categorize the images under the supervision of topic-related text descriptions. Further, a comparative experimental investigation is provided on utilizing text and image information to tackle image classification.

### SUMMARY

The scope of the invention is encompassed by the subject-matter of the claims.

Embodiments of the present invention are directed to systems and methods for processing, reviewing, and tagging electronic items.

According to one embodiment of the present invention, a method for processing a plurality of electronic items includes: for each item of the electronic items, each item being associated with an item identifier, segmenting, on a processing device, each item into a plurality of segments, for each segment of the plurality of segments: hashing the segment to produce a segment hash value; updating a first table with the segment and the segment hash value; and adding an entry to a second table, the entry including the item identifier and the segment hash value; and outputting, from the processing device, the first table and the second table.

The updating the first table may include: using the segment hash value to determine if the segment is already in the first table; and if the segment is not in the first table: computing an entropy of the segment; and creating a new entry for the segment in the first table, the entry including: the segment; the segment hash value; and the entropy of the segment.

The segmenting each item into a plurality of segments may include: canonizing the item, the canonizing including: detecting an alias in the item; and replacing the detected alias with a canonical name.

The alias may be one of a name, an address, a telephone number, an account name, an account number, a date, a credit card number, a social security number, an e-mail address, and a user defined pattern.

The item may include text, the text including a plurality of paragraphs and wherein each of the plurality of segments corresponds to one of the paragraphs.

The item may include an image and hashing the image may include: scaling the image to have a first dimension equal to a normalized image size; padding the image to have a second dimension equal to the normalized image size; and computing the segment hash value of the scaled and padded image.

The method may further include clustering similar segments of the items.

According to one embodiment of the present invention, a method for processing a plurality of items, each of the items including a plurality of segments, includes: receiving, on a processing device, a request to display a first item of the items; retrieving, from a second table in a database stored on a computer, a first list of segment entries associated with the first item; retrieving, from a first table stored in the database, a first plurality of segments corresponding to the first list of segment entries; and outputting the first plurality of segments.

The method may further include: receiving a request to tag a first segment of the first plurality of segments of the first item with a tag; storing the tag in a tag table entry associated with the first segment; and storing the entry in a tag table.

The tag stored in the tag table entry may be an indication that the first segment has been reviewed.

The method may further include: loading, from the database, a second plurality of segments associated with a second item of the items, the second plurality of segments including the first segment; loading, from the tag table, the tag table entry associated with the first segment; and displaying the second plurality of segments and the tag stored in the entry associated with the first segment.

The displaying the second plurality of segments may include displaying the first segment in a color different from a color of at least one of the other segments of the second plurality of segments.

The first plurality of segments may be displayed to a first user and the second plurality of segments may be displayed to a second user.

Each of the segments may have an associated timestamp and the request may further include a request to display a second item of the items, the method further including: retrieving the second item; aggregating the segments of the first item and the segments of the second item; sorting the aggregated segments by timestamp; removing duplicate segments to produce a reduced list of segments; and displaying the reduced list of segments, sorted by timestamp.

The first item is a first email and the second item is a second email.

The method may further include displaying a first segment of a first item adjacent to a second segment of a second item, the first segment differing from and having a same position as the second segment.

The method may further include: searching the plurality of items, the searching including: receiving a search query; searching the first table for entries matching the search query; and returning a plurality of matching entries, wherein the first item includes at least one segment associated with a corresponding one of the matching entries.

The method may further include: receiving a selection of a segment of the matching segments; and returning a plurality of items containing the selected segment.

The method may further include: displaying a list of items being a subset of the plurality of items, the list of items including the first item, and the first item having a first item identifier; displaying the first plurality of segments; receiving a request to display a second item; saving position information, the position information including the list of items, the first item identifier, and a segment hash; displaying the second item; loading the position information; and displaying the first item in accordance with the position information.

According to one embodiment of the present invention, a system for processing a plurality of electronic items includes: a database running on a computer, the database being configured to store a first table and a second table; a processing device configured to: segment each item into a plurality of segments, each item being associated with a item identifier; for each segment of the plurality of segments: hash the segment to produce a segment hash value; update the first table with the segment and the segment hash value; and add an entry to the second table, the entry including the item identifier and the segment hash value.

According to one embodiment of the present invention, a method for displaying segments of a plurality of items includes: segmenting each the plurality of items into a plurality of segments; computing, on a processing device comprising a processor and memory, a plurality of similarities between segments of the plurality of segments; clustering, on the processing device, the plurality of segments into a plurality of clusters in accordance with the computed similarities, each of the clusters comprising a plurality of similar segments of the plurality of segments; and displaying a cluster of the plurality of clusters.

According to one embodiment of the present invention, a method for translating an item includes: segmenting, on a processing device comprising a processor and memory, the item into a plurality of segments; computing, on the processing device, a plurality of segment hash values, each of the segment hash values corresponding to one of the plurality of segments; identifying, on the processing device, a translated segment in a translation table in accordance with a segment hash value of the plurality of segment hash values, the identified translated segment corresponding to a segment of the plurality of segments; and displaying the identified translated segment.

According to one embodiment of the present invention, a method for displaying a plurality of items, each of the plurality of items being a different version of an item, includes: segmenting, on a processing device comprising a processor and memory, each of the items into a plurality of segments; hashing, on the processing device, each of the plurality of segments; identifying, on the processing device, a first differing segment of a first item of the plurality of items and a second differing segment of a second item of the plurality of items, the first differing segment having a segment hash value different from a segment hash value of the second differing segment and the first differing segment and the second differing segment having a same respective position within the first item and the second item; and displaying the first differing segment adjacent to the second differing segment.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a block diagram of a system for processing a review set in accordance with one embodiment of the present invention.
FIG. 2 is a block diagram of a processing device 102 according to one embodiment of the present invention.
FIG. 3A illustrates an example item and examples of rows added to a table of contents table in a database during processing of the example item according to one embodiment of the present invention.
FIG. 3B is a visual depiction of a process for normalizing an image according to one embodiment of the present invention.
FIG. 3C is a flowchart of a method for normalizing an image according to one embodiment of the present invention.
FIG. 3D is a diagram of an email containing multiple previous messages with metadata within the body of the email.
FIG. 4 illustrates a glossary table containing entries according to one embodiment of the present invention.
FIG. 5 is a flowchart of a method of processing data according to embodiment of the present invention.
FIG. 6A is a flowchart of a method of measuring a segment according to embodiment of the present invention.
FIG. 6B is a flowchart of a method of measuring a segment according to embodiment of the present invention.
FIG. 6C is a schematic depiction of a user interface for reviewing clusters of segment clusters according to one embodiment of the present invention.
FIG. 6D is a flowchart illustrating a method for clustering items on segments according to one embodiment of the present invention.
FIG. 7 is a block diagram of a system for reviewing items of a review set according to one embodiment of the present invention.
FIG. 8 is a flowchart of a method of processing a request to tag a segment according to one embodiment of the present invention.
FIGS. 9 through 25 are schematic representations of screenshots of a workflow for reviewing and tagging segments of items in accordance with one embodiment of the present invention.
FIG. 26 is a flowchart of a method of creating a "single view" or "chronograf" of multiple items according to one embodiment of the present invention.
FIG. 27 illustrates nine related emails as nine separate items within a review set and the relationships between the emails.
FIGS. 28 through 38 are schematic representations of screenshots of a workflow for reviewing and tagging segments of the nine items in a single view mode according to one embodiment of the present invention.
FIG. 39 is a schematic representation of the effect of tagging segments of the nine items according to one embodiment of the present invention.
FIG. 40. is a schematic representation of six different items, each of which is a different version of a document.
FIGS. 42 through 52 are screenshots of a user interface for reviewing and tagging multiple versions of an item according to one embodiment of the present invention.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Like reference numerals designate like elements throughout the specification.

In an item review process, a collection of items (such as documents, images, email correspondence, audio recordings, audio and video transcriptions, etc.) make up a review set that may be reviewed by a group of examiners such as attorneys, paralegals, accountants, and other business personnel. Generally, each item contains one or more "segments" of text (also referred to as a "graf" or "grafs" in U.S. Provisional Application No. 61/729,310). According to one embodiment, each segment corresponds to one paragraph of text. In other embodiments, each segment may correspond to a single sentence, a single line of text, a block of computer code, an image, a table, or other logical subunits of a larger item. Other examples include cells in a spreadsheet or table, posts on a blogging or microblogging platform (e.g., Twitter® tweets, Tumblr® posts, Facebook® status updates, etc.), instant messages, text messages (e.g., SMS and MMS), images, portions of images, and metadata fields (such as a "subject" line and each email address in a list of email addresses, document creation and modification times, notes and comments associated with word processing documents, location information embedded in images, etc.). A set of items may contain a large number of segments that are repeated between items.

For example, repeated segments may include language that is common between standard contracts with a large number of different parties, boilerplate language added to emails, the text of prior emails in a reply to an email or a forwarding of the email to another party, and revised drafts of items (e.g., revised drafts of documents).

Embodiments of the present invention are directed to systems and methods for reducing duplication of effort in reviewing segments of items of a review set by tracking and marking the review of the items at a segment level, rather than on a per-item level. As such, embodiments of the present invention are directed to systems and methods for processing review sets of items to generate sets of segments, for allowing examiners to review and mark segments, for displaying collections of items in a reduced format, and for classifying items for characteristics such as whether they should be marked as privileged.

For example, a review set of items may be initially processed by the system to generate a collection of items, each item including one or more segments. When an examiner reviews an item such as an email, an examiner may mark a particular segment as being reviewed and irrelevant. Later, when the same examiner or another examiner reviews another item containing the same segment, the segment may be displayed in a way to indicate that it was previously reviewed and deemed irrelevant, such as by changing the color of the text to a light gray.

In addition, multiple emails that may be portions of a single conversation may be merged into a single view (or "chronograf view") on the entire conversation with duplicated portions of the emails removed such that an examiner may review the entire thread without wasted effort in reviewing already-reviewed segments. This "single view" may include not just e-mails, but also items, related items, or any items that were chosen for this treatment, such as instant messaging logs, comment threads in online forums and social media, and updates to wiki entries.

As another example, all items containing the segment "ATTORNEY-CLIENT CONFIDENTIAL" may be automatically flagged as being privileged, thereby simplifying the process of classifying items.

A system and a method for initially processing a review set according to one embodiment of the present invention will be described in more detail below.

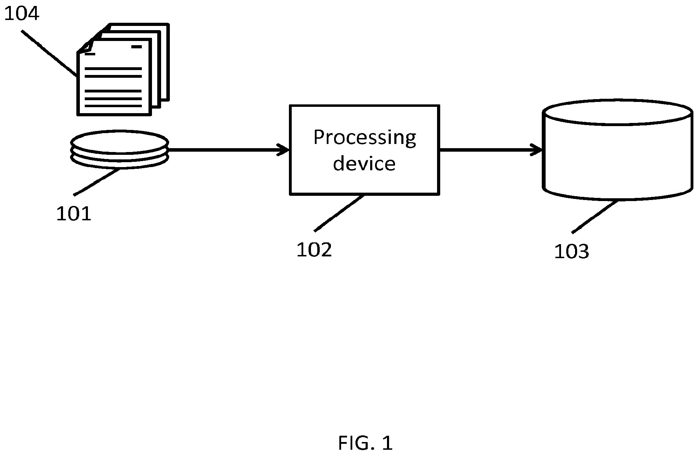

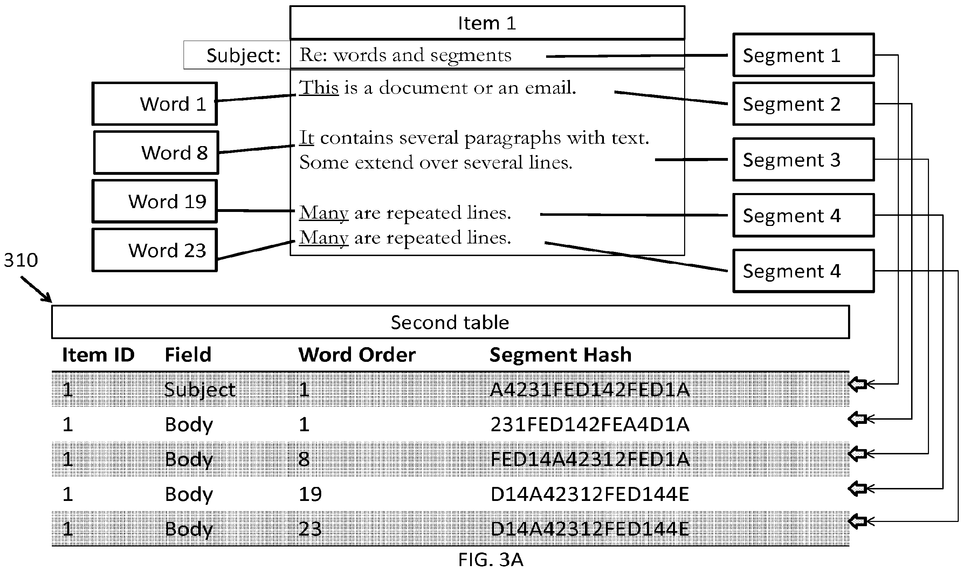

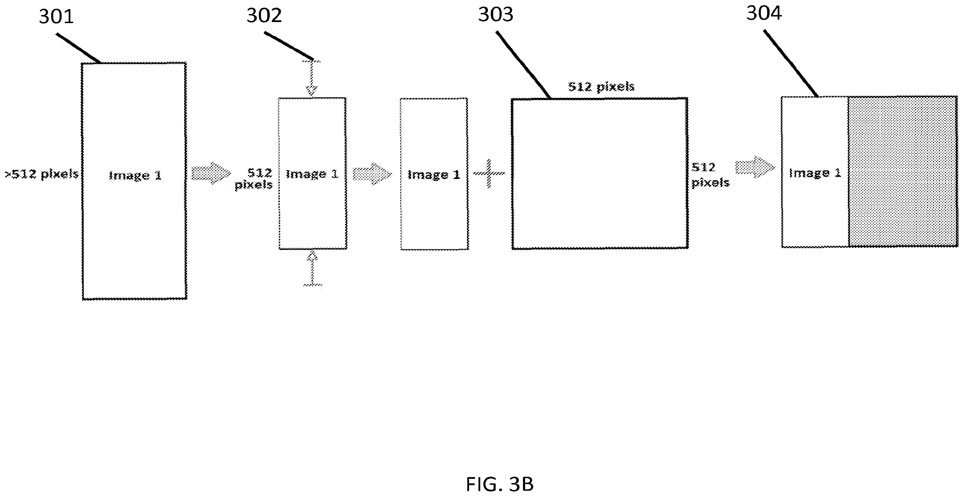

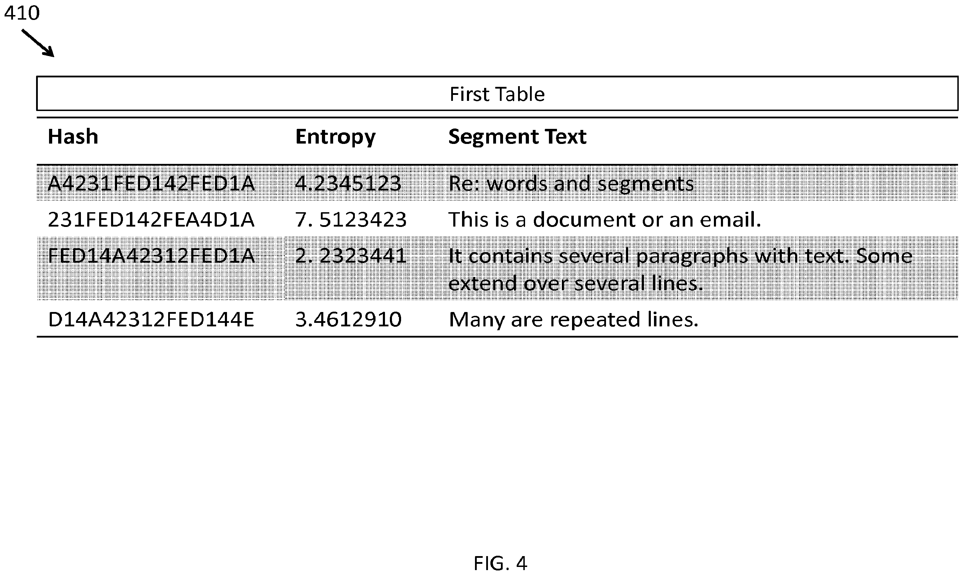

FIG. 1 is a block diagram of a system for processing a review set in accordance with one embodiment of the present invention. As seen in FIG. 1, a set of items 104 are electronically stored in one or more data storage devices 101. An item may be a document or an email including several fields, such as, for example, a subject, an author, and a body, and each item may be assigned or associated with a globally unique identifier (GUID). Examples of data storage devices include, but are not limited to, hard drives, solid state drives and other flash memory, CDs, DVDs, networked storage devices, and cloud storage services. A processing device 102 such as a computer or a plurality of computers processes the items stored on the data storage devices 101 to represent the items as "entries" or "glosses" (see FIGS. 3A, 3B, and 4, described in more detail below), and stores the entries in an index database 103. The index database 103 includes a "glossary" table or "segment table" 410 (see FIG. 4, described in more detail below) which stores the entries and a "table of contents" table 310 (see FIG. 3A) which contains a list of entries associated with each item read from the data storage device 101. The index database 103 may also include a word index for storing locations of individual words found within the segments. In some embodiments of the present invention, the processing device 102 and the index database 103 may be implemented on a single computing device or separate computing devices. In addition, the processing device 102 may include a single computer or multiple computers and/or processors working in conjunction, and the index database 103 may include either a single computer or multiple computers. The computer may be any typical computer system including a processor, memory, and various input and output devices (e.g., mass storage device and network interfaces), where the memory stores instructions to be executed on the processor to perform various operations and where the computer communicates with other computer systems via the input and output devices.

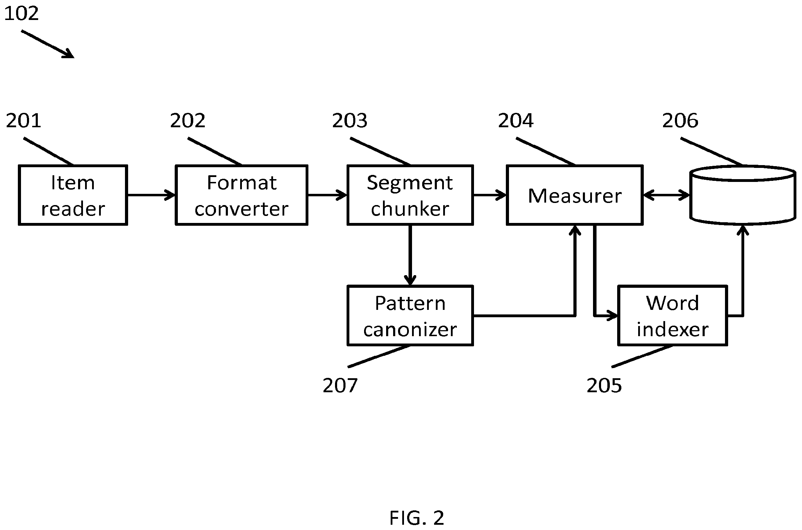

FIG. 2 is a block diagram of a processing device 102 according to one embodiment of the present invention. Embodiments of the present invention are not limited to the structure described below and may be implemented in a variety of other manners as will be apparent to a person of ordinary skill in the art. The processing device 102 includes an input/item reader 201, a format converter 202, a pattern canonizer (or "detector") 207, a segment chunker/splitter 203, a measurer 204, and a database connector 206, which may be implemented using dedicated hardware such as an ASIC, FPGA, or custom designed special purpose chip, may be implemented using software running on a general purpose processor, or combinations thereof. The input/item reader 201 may be configured to receive and to read items of the review set from the storage device 101.

The format converter 202 converts the items it receives into a format that may be processed by later stages of the processing. For example, the format converter 202 may be used to extract plain text from various file types including, but not limited to, Microsoft® Word® documents, Microsoft® Excel® spreadsheets, Microsoft® Outlook® mailbox files, Microsoft® Exchange® database files, HTML documents, emails stored in Maildir or mbox formats, Adobe® Portable Document Format (PDF) files, Adobe PostScript files, device independent file format (DVI) documents, etc. The format converter may also identify particular types of fields within the document, such as item titles, subject lines, authors, timestamps, "to" and "from" fields, and body text.

Within the context of embodiments of the present invention, a "word" may be defined as one or more adjoining characters separated by white-space. For instance, "dog" and "cat-burglar" may be treated as "words." In addition, "white-space" may be used to refer to spacing characters that are not visible or significant to the meaning of the text, such as: spaces (including non-breaking spaces), control characters, tabs, line-feeds, carriage returns, and paragraph markers.

The segment chunker/splitter 203 receives the extracted text from the format converter 202 and divides the text of each field into one or more segments. As shown in FIG. 3A, a segment may be a series of words, patterns and punctuation terminating on a natural boundary such as the end of a field, line, tab stop or paragraph. For example, in one embodiment of the present invention, the text may be broken down such that each paragraph in the text corresponds to a segment, for example, by detecting newlines according to methods commonly known in the art, such as detecting carriage return (CR) characters within the text or a carriage return followed by a line feed (LF) character, or by detecting two such newline commands in a row. According to other embodiment of the present invention, segments may be divided along other logical breaks, such as on a sentence-by-sentence basis, on a per-line basis, on a block or function basis in computer code, on an image or table basis, or by other logical subunits of the larger item.

The segment chunker/splitter 203 may also normalize the segment by: 1) Converting all characters into a consistent representation, such as by converting the characters to Unicode; 2) Replacing characters such as fancy quotes ("") and fancy apostrophes (') with their plain equivalents; 3) Simplifying word processor formatting such as "1^{st}" and "Product™" with "1st" and "Product(tm)", 4) Removing leading and trailing white-space; 5) Removing redundant white-space that does not have any significance, such as extra spaces and tabs between words and sentences; 6) Removing formatting (e.g., bold, italics, underlining, etc.); 7) Removing leading and trailing decorative characters (e.g., leading ">" marks in email replies, bullets and list numbering, and end of line characters); 8) Conversion of text to a standard Unicode composition (e.g., Unicode precomposed characters); and 9) Reencoding text in a standard encoding (e.g., converting ASCII text to UTF-8 or UTF-16). In other embodiments of the present invention, the normalization may be performed by other components of the processing device 102 such as the input/item reader 201 or the format converter 202.

In addition, the segment chunker/splitter 203 also supplies the normalized segment to the pattern canonizer (or "detector") 207. The text of a segment may include a pattern such as a person's name, a date or a credit card number. If so, a temporary segment may be created that includes the original segment, with the patterns replaced by canonical pattern names. The pattern canonizer 207 analyzes the text of the segment to identify "patterns" such as a date, a web address, an email address, a credit card number, a phone number, a social security number, or a personal or corporate name. The pattern canonizer 207 may identify these patterns using, for example, regular expressions or other techniques well known in the field. Each pattern identified in the segment may be replaced by a canonical name. For example "1/1/2012" may be replaced by "[DATE]" and "(626) 867-5309" would be replaced by "[PHONE]".

In addition, the pattern canonizer 207 may be configured to detect aliases and replace those aliases with canonical names. An alias may be defined as a common name for a group of objects with unique names. For instance: USER-00123 might be an alias for the given names, account names or account numbers of a particular custodian; EMPLOYEE might be an alias for any name that may be recognized as an employee of a company; and PATENTNUM might be an alias for any of several patent numbers. Aliases may differ from patterns in that an alias may be generally a defined collection of particular strings, whereas a pattern uses, for example, a regular expression, to specify a class of strings.

The normalized segments from the segment chunker/splitter 203 and the pattern canonizer 207 are then supplied to the measurer 204. The measurer 204 computes a hash of each segment. The hash may be computed using any of a variety of hash functions that are well known in the art, such as MD5, SHA-1, and SHA-3. The measurer 204 then uses the database connector 206 to check a glossary 410 stored in index database 103 to determine whether a segment corresponding to the hash already exists in the glossary 410. According to one embodiment, the glossary 410 is a table in the index database 103. If no match is found, the measurer 204 calculates the entropy of the segment. The entropy of a segment is a representation of an amount of randomness of the information contained in the segment and is described in more detail in "SYSTEM AND METHOD FOR ENTROPY-BASED NEAR-MATCH ANALYSIS," App. No 12/722,482, filed in the USPTO on March 11, 2010 and issued on July 17, 2012 as Pat. No 8,224,848. The calculated entropy, together with the hash, may be referred to as a "measure" of the hash. The measure and the segment text may then be stored together as an entry (which may be referred to as a "gloss") in the glossary 410 via database connector 206. As such, according to one embodiment of the present invention, the glossary 410 may be a collection (or hash table) of entries sorted (or keyed or indexed) by hash. If a match is found in the glossary 410, then this particular segment has been seen before and there is no need to store another entry in the glossary 410.

If a segment contains no text or data or is made up entirely of white space, then it may be referred to as a null segment.

If a segment has no patterns, a single entry may be created or updated. If a segment has one or more patterns, then two entries are created (one for the original segment and one for the canonized segment), the canonized segment being linked to the original segment. The canonized segments allow two segments that differ only in their pattern contents to be equated. In this way, a reviewer may find a match for a segment where only the pattern text is changed. For example, common paragraphs in contracts in which only the party names are different could be detected using this "pattern segment" method, while the original segments would be considered completely different entities.

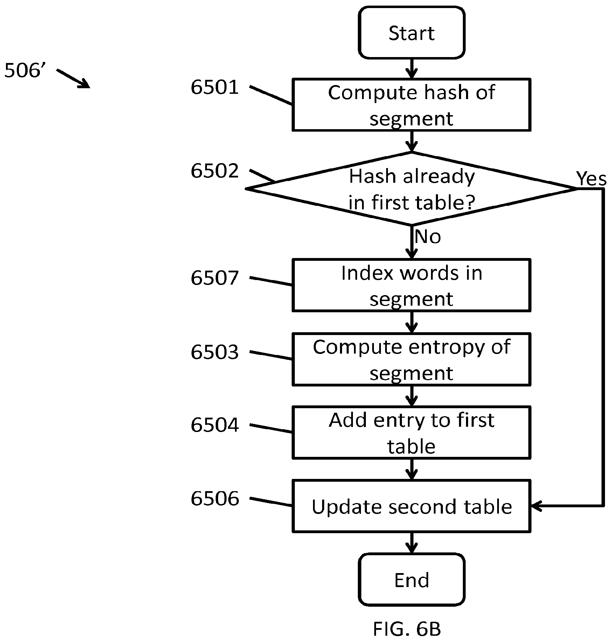

In some embodiments of the present invention, the measurer 204 is further configured to index the words in the segment, as described in more detail below with reference to FIG. 6B. In other embodiments of the present invention, the processing device 102 further includes a word indexer 205 configured to index the words in the segment. The word indexer may be coupled to the measurer 204 and to the database connector 206.

FIG. 3A illustrates an example item and examples of entries added to a table of contents 310 of a database during processing of the example item according to one embodiment of the present invention. FIG. 4 illustrates a glossary table 310 containing entries created when processing the item according to one embodiment of the present invention.

As seen in FIG. 3A, each entry in the table of contents 310 includes an "Item ID," which refers to the item in which the segment was found, a "word order," which refers to the position (or "word position") at which the segment begins in the item, a "segment hash," which uniquely identifies the segment, and a "field" for identifying the type of field the segment was found in. A field may be defined as a reference for data that is embedded in an item. A field has a unique identifier, a data type, and content. A field type may be, for example, numeric, date, blob, or text. A numeric field contains an integer or a floating point value and may be used to identify, for example, a MessageId, a logical size, or a GPS location. A date field contains a value representing a date and time, for example, a date on which the item was created (a "creation timestamp") or a date on which the item was sent (a "sent timestamp"). A blob field may be used to contain binary data, such as a hash or a photo. A text field may be composed of one or more segments, such as a "body" containing message text and from and to fields containing one or more email addresses.

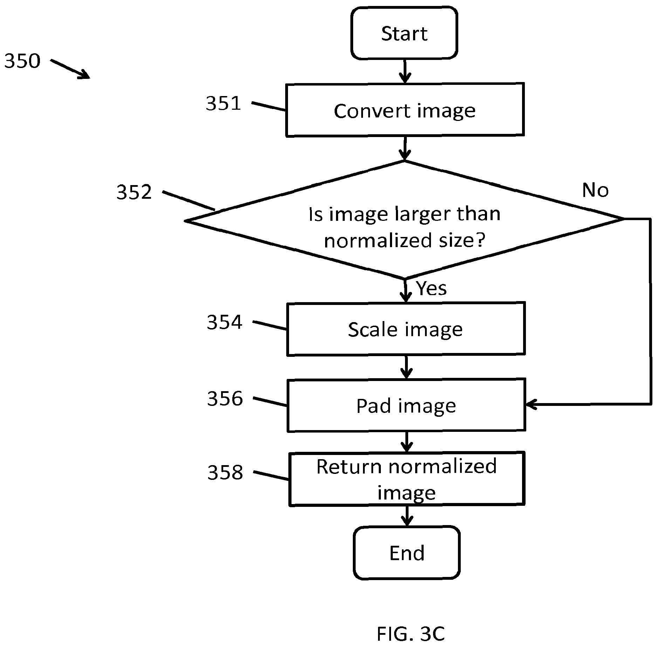

In some embodiments of the present invention, raster images included in the items (e.g., images embedded in a word processing documents, images within emails and web pages, etc.) are also normalized and hashed to be added to the glossary 410 and the table of contents 310. FIG. 3B visually depicts a process for normalizing an image and FIG. 3C is a flowchart of a method for normalizing an image according to one embodiment of the present invention.

Referring to FIG. 3B, an image 301 to be processed (e.g., an image in a document or being a document) having at least one dimension (e.g., vertical size or horizontal size) larger than a normalized image size (in the embodiment shown, 512 pixels) is then scaled such that its longest edge is equal to the normalized image size (in the embodiment shown, shrunk to a height of 512 pixels). The scaled image 302 is then padded to form a normalized image 304 having vertical and horizontal directions equal to the normalized image size (as shown, 512 pixels by 512 pixels).

Methods and operations of various embodiments of the present invention described herein with respect to flowcharts (such as FIG. 3C) may be executed on any of a variety of processing devices known to one of ordinary skill in the art. Such processing devices may include, for example, one or more computers including a processor and memory (where the memory stores instructions to be executed by the processor to perform the operations described herein), a field programmable gate array (FPGA), an application specific integrated circuit (ASIC) or combinations thereof. As such, in embodiments of the present invention the various operations described herein may be performed in hardware and/or software.

Referring to FIG. 3C, a method 350 for normalizing the image includes converting the image, if necessary, from its native format (e.g., CMYK) to an RGBA representation in operation 351; determining if the image is larger than the normalized image size in operation 352, if so, scaling the image to the normalized image size in operation 354, padding the image to the normalized image size in operation 356 (if the image is smaller than the normalized size, then the original image is padded to the normalized size without scaling), and returning the normalized image in operation 358.

Embodiments of the present invention are not limited to specific details of the method disclosed herein and the normalization of images may be processed in a variety of other ways such as: omitting the padding of the images prior to returning the normalized images; scaling up images that are smaller than the normalized image size before padding; and cropping images to defined distances between salient points in the images (such as by detecting "maximally stable extremal regions") and other techniques as would be known to one of skill in the art of image processing.

The normalized image 304 can then be hashed using any of the methods described above with respect to hashing text, such as applying the MD5, SHA-1, or SHA-3 algorithms to the normalized image and a segment can be generated for the normalized image in the glossary 410.

By normalizing images prior to computing the hash, differently scaled versions of images or versions of the images differing compression format or file format will likely map to the same hash value, thereby increasing the likelihood that substantially identical copies will be detected.

In addition, in other embodiments, the images can be hashed without first normalizing the images, where the hash can be computed by: computing a normalized luminosity histogram of the image; computing a Radon transform of the image; computing a Haar wavelet of the image and discarding higher order terms in the computed wavelet, or other techniques that would be known to one of skill in the art of image processing.

In addition, in other embodiments, audio and video files could be transcribed into text using available software and the text segments could also be processed.

In addition, metadata automatically inserted into the body of an item by software can also be processed. This text is generally not created by a user, but is included alongside data supplied by a user. For example, when replying to or forwarding an email message, header of the previous message is typically included in the body of the new message. This header metadata typically includes the names and email addresses of the sender, the recipients, subject line, and a timestamp with the sending time of the previous message. Furthermore, metadata associated with older replies are also typically included in the body of the email messages.

In some embodiments, the portions of the items that are identified as being metadata are not processed as segments, thereby reducing the number of segments produced within the item. The metadata can be parsed and applied to particular segments (e.g., segments can be tagged by the metadata).

As such, in some embodiments of the present invention, segments identified between blocks of metadata within an email (or between a block of metadata and the end of the email) are associated with the timestamp of the metadata block above those segments. As such, segments within an email can be accurately associated with a timestamp corresponding to the creation time of the segment, rather than the creation time of the email that the segment appears in. In addition, the segments can be accurately associated with the other metadata such as the sender and recipient fields and the subject lines.

Furthermore, extraneous information located in the metadata blocks can be discarded during a field normalization procedure. For example, replying to or forwarding a message typically causes "RE:" or "FW:" (or variants thereof such as "Re:" and "Fwd:") to be prepended to the subject line. In some embodiments of the present invention, the subject line is normalized by removing the string of "RE:", "FW:", and other additions made by email clients to leave the underlying subject line.

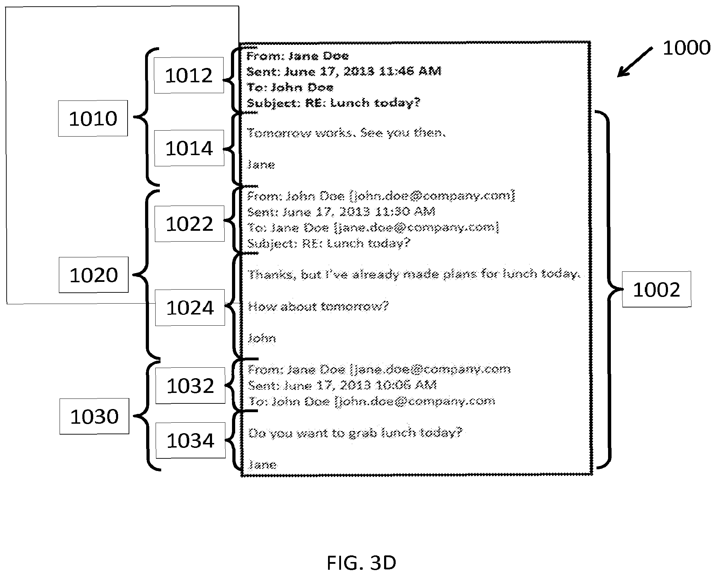

Referring, to FIG. 3D, as one example a single email 1000 may contain a current message 1010 and previous messages 1020 and 1030 within the body 1002 of the message 1000. Each of the previous messages begins with a metadata block 1022 and 1032 and followed by body text 1024 and 1034, respectively. As such, according to one embodiment of the present invention, the metadata blocks 1022 and 1032 are detected and parsed to determine the timestamps (e.g., the "Sent" field), the sender (e.g., the "From" field), the recipient(s) (e.g., the "To" field), and the subject of the message (the "Subject" field). As described above, the "Subject" field can be normalized by removing the prefixed portions added by an email program (e.g., the "RE:" string in the "Subject" lines of messages 1020 and 1030). As such, the metadata in block 1022 can be associated with the segments of body text 1024 and the metadata in block 1032 can be associated with the segments of body text 1034, rather than being associated with the metadata 1012 of the entire message 1000.

According to one embodiment, the metadata fields which have assigned field identifiers are stored along with the segment hash in the table of contents. Every segment in an item has a field code. Some field codes represent item metadata and other field codes represent item metadata found within the text of the body.

Whether or not an entry already exists for this particular segment in the glossary 410, as shown in FIG. 4, according to one embodiment of the present invention, the processing device 102 updates the table of contents 310 by adding a new entry with the Item ID of the item that the segment was found in, the field that the segment was found in, the position of the word within the field at which the segment begins, and a segment hash, which provides a reference to the associated entry in the glossary 410. For example, while processing an email, the processing device 102 may identify three segments within the body of that email, where each of the segments may be, for example, a paragraph or an image). As such, the processing device 102 would generate three entries, one for each of the three segments, and three new entries would be added to the table of contents 310, each of the entries including a segment hash associated with a corresponding one of the entries. As such, the email may later be reconstructed by loading all of the rows of the table of contents 310 associated with the email's Item ID, using the segment hash of each row to look up the entries associated with each row, and displaying the segment contents (e.g., text or an image) associated with each entry in accordance with the field and word order of those segments within the email.

Referring to FIG. 4, according to one embodiment of the present invention, the glossary 410 contains a list of all unique segments. Each row includes the content of the segment (e.g., text, an image, or other content), the hash value of the content, and the entropy (or some other measure) of the content. This table is indexed by hash value and by entropy. If the system has a hash value of a segment, it can look up the entropy value or the text. If the system has the entropy of a segment, it can find similar segments by finding the rows with the closest entropy value.

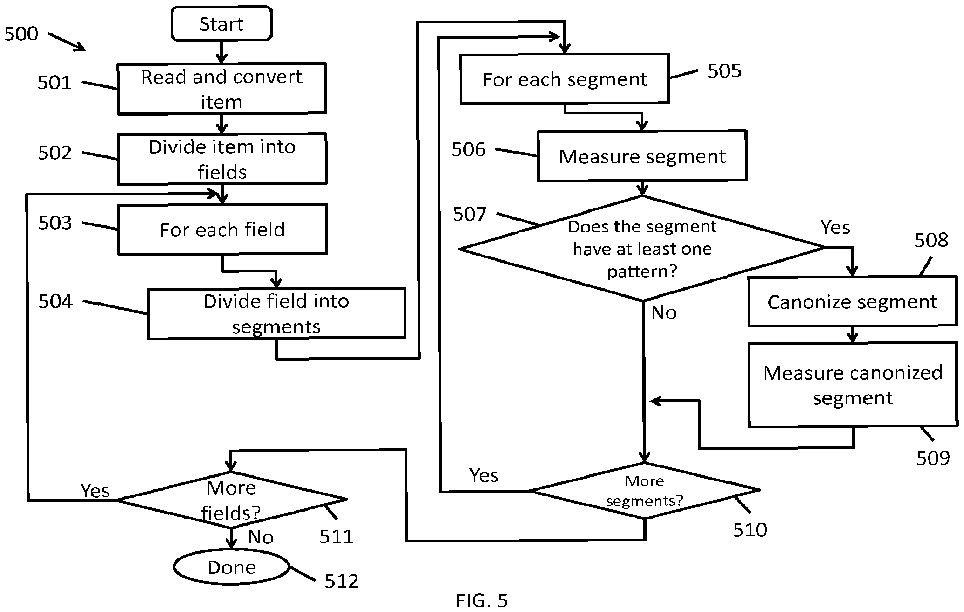

FIG. 5 is a flowchart of a method 500 of intake processing an item of the review set into an item review system according to embodiment of the present invention.

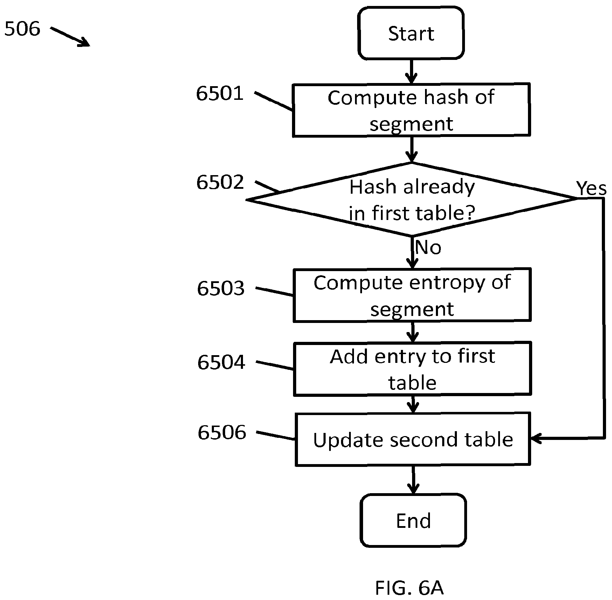

Each item may be initially read from a data storage device and converted into a standardized format 501. The item may then be divided into a plurality of fields 502, such as title, subject, body, metadata, etc. Each field may then be divided into one or more segments 504, where the boundaries between segments may be defined, for example, by carriage returns or other markers. Each segment may then be measured 506 (as described in more detail below with reference to FIG. 6A). In addition, each segment may be analyzed (e.g., parsed) 507 to determine if it contains at least one pattern such as a date, a name, a URL, a credit card number, etc. If it does contain at least one pattern, then the segment may be canonized 508 to replace the patterns with canonical representations of the patterns and then the canonized segment may also be measured 509. In operation 510, if there are more segments to process, then the loop may be repeated for the next segment. If there are no more segments to process, then the system determines in operation 511 if there are more fields to process. If there are more fields to process, then the operation returns to operation 503 to process the next field. Otherwise, the processing of the current item is done 512 and the intake processing of items may continue with the next item in the review set.

FIG. 6A is a flowchart of a method of measuring 506 a segment in accordance with one embodiment of the present invention, where the measuring of a segment is a sub-operation of the method of intake processing an item as shown in FIG. 5. Initially, a hash of the segment may be computed in operation 6501. The hash may be any of a variety of hash functions that are well known in the art, such as MD5, SHA-1, or SHA-3. The glossary 410 may then be checked to see if the hash is already exists in the glossary 410 in operation 6502. If it does not, then the segment has not been seen before and the entropy of the segment is computed in operation 6503. The hash and the entropy are then combined to form a measurement, and the measurement may then be combined with the segment itself (or "segment text") which may be added to the glossary 410 in operation 6504. The table of contents 310 may then be updated in operation 6506 as described below. If the hash is already in the glossary 410, then the operations of computing the entry and adding an entry to the glossary 410 are skipped and the table of contents 310 may be updated in operation 6506. Updating the table of contents 310 in operation 6506 includes adding an entry as shown, for example, in FIG. 3A, where the entry includes an "Item ID," which refers to the item in which the segment was found, a "word order," which refers the position at which the segment begins in the item, a "segment hash," which identifies the segment associated with that entry, and a "field" for identifying the type of field the segment was found in, as seen in FIG. 3A and as described above.

Referring to FIG. 6B, according to another embodiment of the present invention, measuring a segment 506 further includes indexing the words in the segment in operation 6507. The word indexing operation is performed if the segment is not already in the glossary 410 and the word indexing operation updates (or creates) an entry in the word index of the index database 103 that associates a given word (e.g., a string of characters in the text that is not broken by whitespace characters) with the segment (or the hash of the segment) that the word was found in, along with the word order (or position) of the word within the segment.

As such, the word index stores a relationship between words found in the processed items with segments containing those words and the positions of the words within the segments, thereby allowing a user to input a query to find segments containing a requested word and to receive a list of segments containing the requested word and the positions of the word within those segments.

In addition, in some embodiments of the present invention, segments can be identified as being "similar" if a human would consider the two segments to be essentially alike. Methods for computing the similarity of the segments include: comparing entropy values, counting the number of words in common between two different segments; and computing an edit distance (such as, but not limited to: a Hamming distance; a Levenshtein distance; a Damerau-Levenshtein distance; and a Jaro-Winkler distance) between the two segments.

Similar segments are grouped together into "segment clusters." These clusters can form a "virtual item" that is disassociated from the item the segments were found in. The segments within a cluster can then be reviewed as a list of virtual items. Each cluster can be named so that a user can understand its content without having to look at the whole cluster.

According to various embodiments of the present invention, the segment clusters can be named by: naming the cluster with the first *N* words that are in common between the segments in the cluster; naming the cluster with the *N* most common words found in all of the segments in the cluster; and naming the cluster with the full text of the first segment created in time.

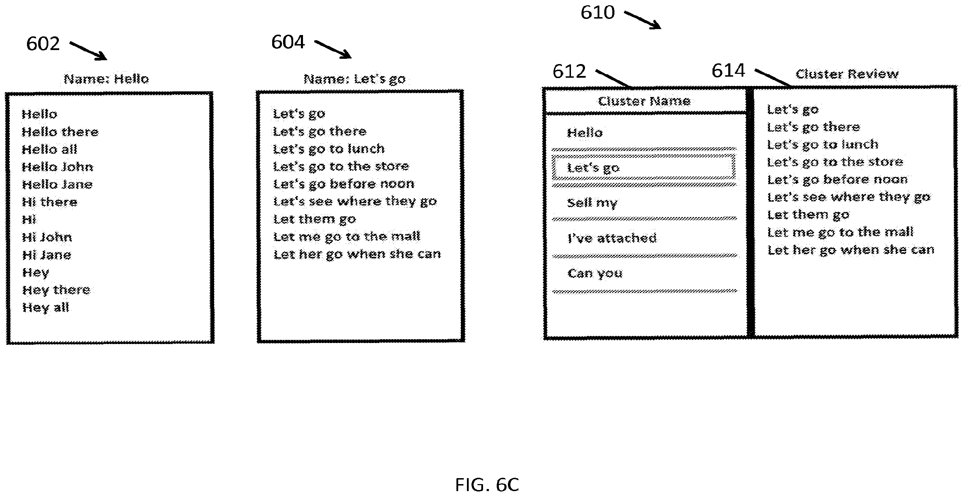

FIG. 6C is a schematic depiction of a user interface for reviewing clusters of segment clusters according to one embodiment of the present invention. Once all unique segments in a review set are assigned to a named cluster, a user could perform a "cluster review" by reviewing a virtual item made up of only the cluster names. This would enable the reviewer to see all the unique ideas of a review set in a single (albeit long) item. As shown in FIG. 6B, cluster 602 with name "Hello" includes segments "Hello" "Hello there" "Hello all" "Hello John" "Hello Jane" "Hi there" "Hi" "Hi John" "Hi Jane" "Hey" "Hey there" and "Hey all". Similarly, cluster 604 with name "Let's go" includes the segments "Let's go" "Let's go there" "Let's go to lunch" "Let's go to the store" "Let's go before noon" "Let's see where they go" "Let them go" "Let me go to the mall" and "Let her go when she can". As such, during review, a user can view a list of cluster names 612 (including, for example, the "Hello" and "Let's go" clusters) and can select a cluster to review from the list of cluster names 612. By selecting a cluster (as shown in FIG. 6B, the "Let's go" cluster is selected) a cluster review pane 614 is updated to show each of the segments in the selected cluster.

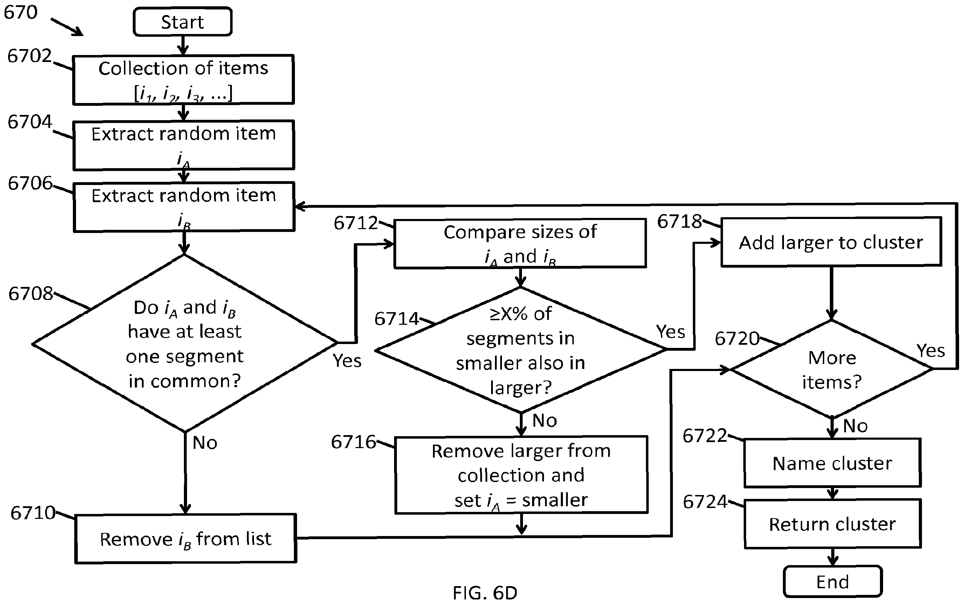

According to another embodiment of the present invention, items are clustered together based on having a certain percentage of segments in common. FIG. 6D is a flowchart illustrating a method 670 for clustering items on segments according to one embodiment of the present invention. The clustering method 670 may be performed, for example, by a processor executing instructions stored in memory. Referring to FIG. 6D, initially a collection of items [*i₁*, *i₂*, *i₃*, ...] is considered for clustering in operation 6702. In operation 6704, a random item *i_{A}* is extracted from the collection and in operation 6706, a second item *i_{B}* is randomly extracted from the collection. In operation 6708, items *i_{A}* and *i_{B}* are examined to determine if they have at least one segment in common. If they do not, item *i_{B}* is removed from the list in operation 6710 and the procedure returns to extract another item *iB* from the collection of items in operation 6706, if there are any items left (see operation 6720).

If *i_{A}* and *i_{B}* do have at least one segment in common, then *i_{A}* and *i_{B}* are compared in size in operation 6712. If less than some threshold percentage ("X%" in FIG. 6D) of the segments in the smaller of *i_{A}* and *i_{B}* (the "smaller") is also in the larger of *i_{A}* and *i_{B}* (the "larger"), then, in operation 6716, the larger is removed from the collection of items and *i_{A}* is set to the smaller of the previously selected *i_{A}* and *i_{B}*. The operation then returns to operation 6720 to determine if there are more items remaining in the collection to be processed.

If at least the threshold percentage of segments in the smaller is also in the larger, then the larger is added to the cluster in operation 6718. In operation 6720, the collection of items is examined to determine if there are more items to be processed. If there are, then another item is selected in operation 6706. Otherwise, the cluster is named in operation 6722 and the named cluster is returned in operation 6724.

Clusters can be named through a variety of techniques such as naming based on the item that was first added to the item cluster, examining the frequency of words in the subject line or file names of the items in the cluster, or based on the time frame of the items in the cluster or the author of the items in the cluster.

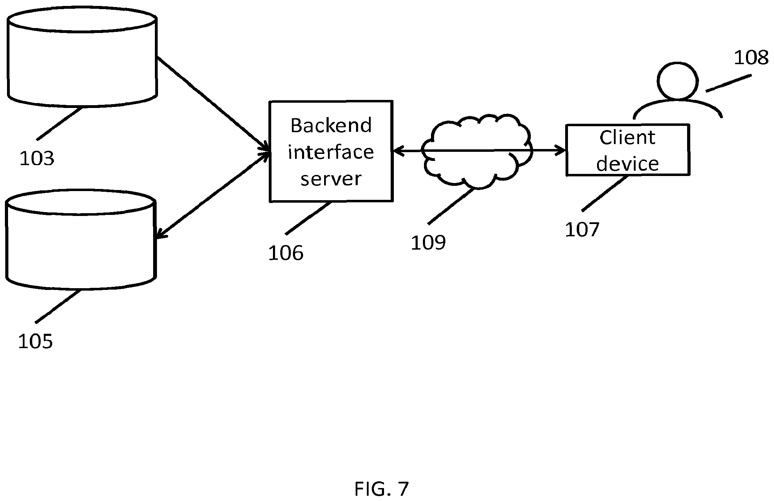

FIG. 7 is a block diagram of a system for reviewing items of a review set according to one embodiment of the present invention. As shown in FIG. 7, a backend interface server 106 may be coupled, for example, over a network, to a session database 105 and the index database 103 storing the glossary 410 and the table of contents 310. The backend interface server 106 may be, for example, a web server configured to serve a website for providing access to the index database 103 to a client device 107 used by an examiner 108. However, embodiments of the present invention are not limited thereto and the backend interface server 106 may be any sort of server configured to receive remote procedure calls, serve requests in accordance with an application programming interface, or otherwise receive commands over a network from a client device 107 used by an examiner 108. The servers may be any typical computer or collection of multiple computers, the computer including a processor and memory, where the memory stores instructions to be executed on the processor to perform various operations and where the servers may further include input and output devices (e.g., a network interface) for communicating with other devices. The client device 107 may be, for example, a computer, a tablet, a smartphone, or any other computing device.

In the embodiment shown in FIG. 7, the client device 107 may be connected to the backend interface server 106 over a network 109, where the network may be a local area network or the Internet. However, embodiments of the present invention are not limited thereto and the client device may be coupled directly to the backend interface server 106 or the client device 107 and the backend interface server 106 may be the same device, such that the examiner 108 directly accesses human input devices and views information on a display attached to the backend interface server 106.

In addition, although only one client device 107 is shown in FIG. 7, embodiments of the present invention include ones in which a plurality of client devices 107 may be connected to the backend interface server 106 and these client devices 107 may be used by a plurality of examiners 108. Furthermore, while only a backend interface server 106 is shown, embodiments of the present invention may be implemented using multiple backend interface servers 106 for distributing the workload.

Reviewing of the items in the review set often occurs in teams, with different examiners or reviewers concurrently reading different sets of items at the same time. To accelerate the reviewing process, duplication of work should be reduced or minimized. Embodiments of the present invention allow tracking of the review state of individual segments rather than individual items. As such, already-reviewed segments that reappear in other items may be automatically marked as having been reviewed. When an examiner reviews an item that contains segments that have already been reviewed, those previously reviewed segments are marked as such. This allows an examiner to avoid, when appropriate, unnecessarily reviewing previously reviewed segments while keeping all the content in its original order and context. This has value even when there is only one reviewer, as it allows the reviewer to keep track of content that they have personally previously reviewed.

In addition, while reviewing items, an examiner may read a segment that makes an item relevant. To indicate its relevance, the examiner may "tag" (or "flag") the item with one or more tags. If a segment is found to be relevant, reviewers often want to examine other items containing the same segments. Using the table of contents 310, the system may easily retrieve a list of such items. As segments are marked as relevant, items that have not been reviewed may be considered to be relevant because they contain a segment that was considered to be relevant in a different item.

According to one embodiment of the present invention, the review state and tags associated with each of the segments may be stored in the session database 105. Although the session database 105 is shown as a separate component in FIG. 7, embodiments of the present invention are not limited thereto and the session database 105 may be implemented as, for example, a separate table in the index database 103, as a separate database running on the hardware server as the index database 103, or in other variations as would be well understood to a person of ordinary skill in the art.

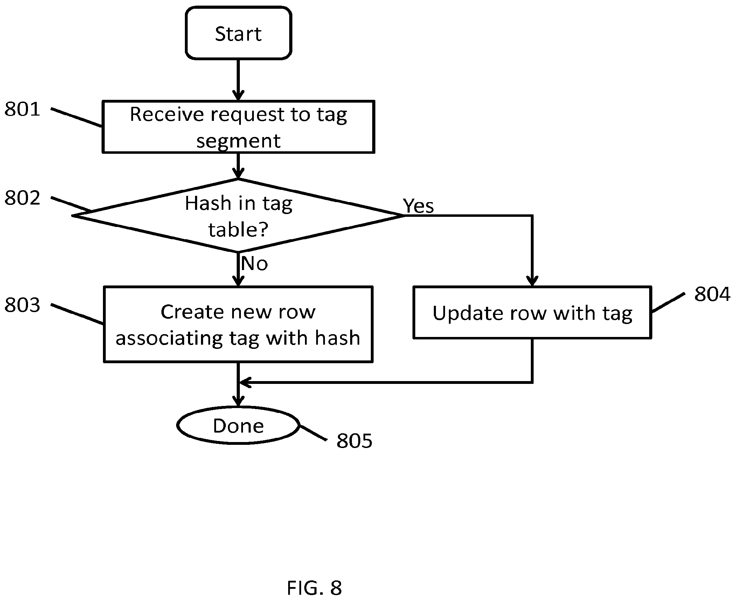

FIG. 8 is a flowchart of a method of processing a request to tag a segment according to one embodiment of the present invention. Initially, the backend interface server 106 a request to tag a segment may include a segment identifier such as the segment hash and the tag that may be to be applied to the segment 801. The session database 105 includes a tag table keyed by segment hash, where each segment hash may be associated with a list or set of tags associated with that segment. A row matching the segment hash may be searched for within the table in operation 802 and, if no matching row is found, a new row associating the segment hash to the given tag may be created in operation 803. If a matching row is found, then the existing row may be updated with the tag in operation 804, where, if the tag is not already in the set of tags associated with the segment, then the tag may be added to that set. After the tag table has been updated in accordance with the request, the process for processing the request is done 805.

Similarly, a tag may be removed from a segment by receiving a request to remove that tag and deleting that tag from the list or set of tags associated with that segment.

According to one embodiment, whether a segment has been reviewed or not (the "reviewed" state) may be tracked using a tag, such as a "reviewed" tag.

In some embodiments of the present invention, the tag table may be stored in a separate session for a particular group of users. As such, independent groups of examiners or reviewers may tag items in the review set independently of one another, without encountering the reviewed status or tags set by the other groups. For example, this may be applicable when an in-house counsel performs a first review of the items before sending them for independent verification by another group. As another example, different groups may review the same set of items for responsiveness to different issues.

In addition, in some embodiments of the present invention, an existing session may be copied and used as a starting point for a new, separate session. For example, when an in-house counsel begins review and would like to hand off the review of items to outside counsel, the in-house counsel's session may be copied to provide a starting point for the outside counsel, who may continue tagging items while the in-house counsel continues an independent review.

In many instances, especially during item discovery in the context of litigation, many items are typically protected from discovery by, for example, the attorney-client privilege or the items' being attorney work product. As such, items in review sets are often tagged to indicate whether they are privileged in order to determine whether or not the items should be produced. According to one embodiment of the present invention, tags may be used to mark segments as being associated with attorney-client privileged information or attorney work product. For example, tagging the segment "ATTORNEY WORK PRODUCT" as privileged due to being attorney work product would tag all items containing that segment, thereby automatically applying the tag to all matching items. Similarly, a segment that included the name of an attorney or an attorney's email address in a "from" field could be used to tentatively set an "attorney-client communication" tag on all matching items. As such, embodiments of the present invention may simplify and accelerate the process of tagging items for privilege status.

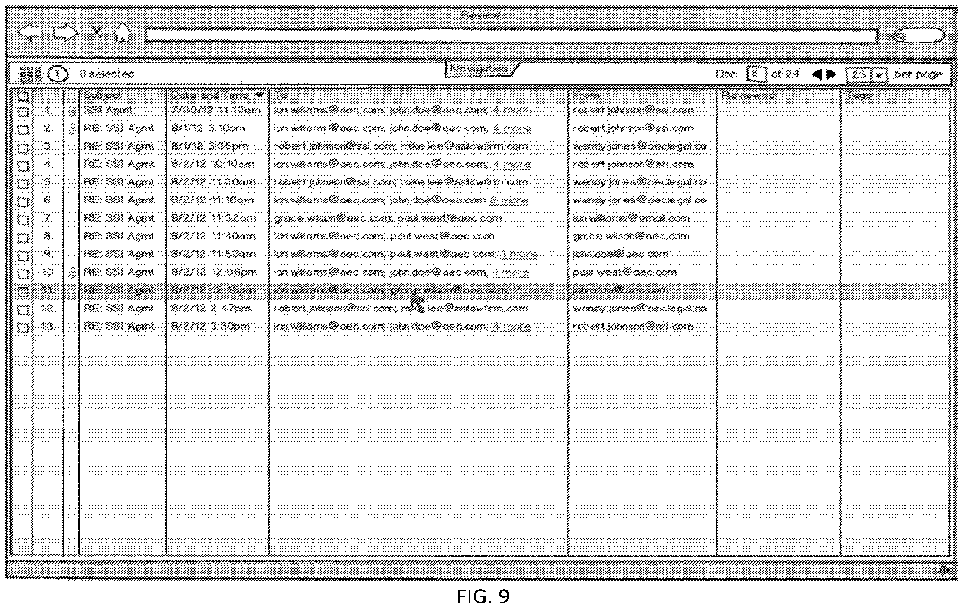

FIGS. 9 through 26 are schematic representations of screenshots of a workflow for reviewing and tagging segments of items in accordance with one embodiment of the present invention. In the embodiments shown in FIGS. 9 through 22, a web browser based interface is shown, but embodiments of the present invention are not limited to web browser based user interfaces and may include, for example, programs ("client software") tailored particularly for reviewing and tagging items.

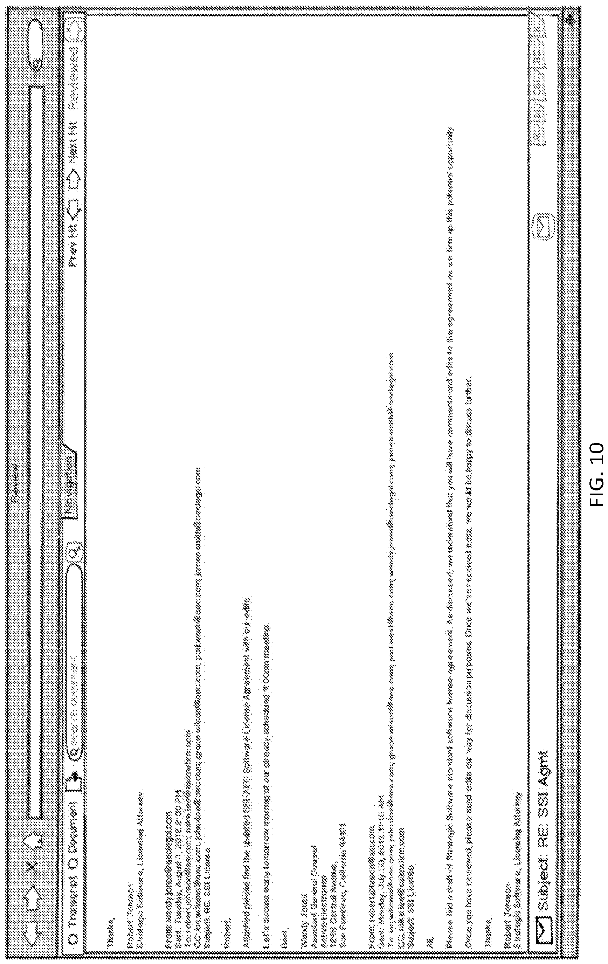

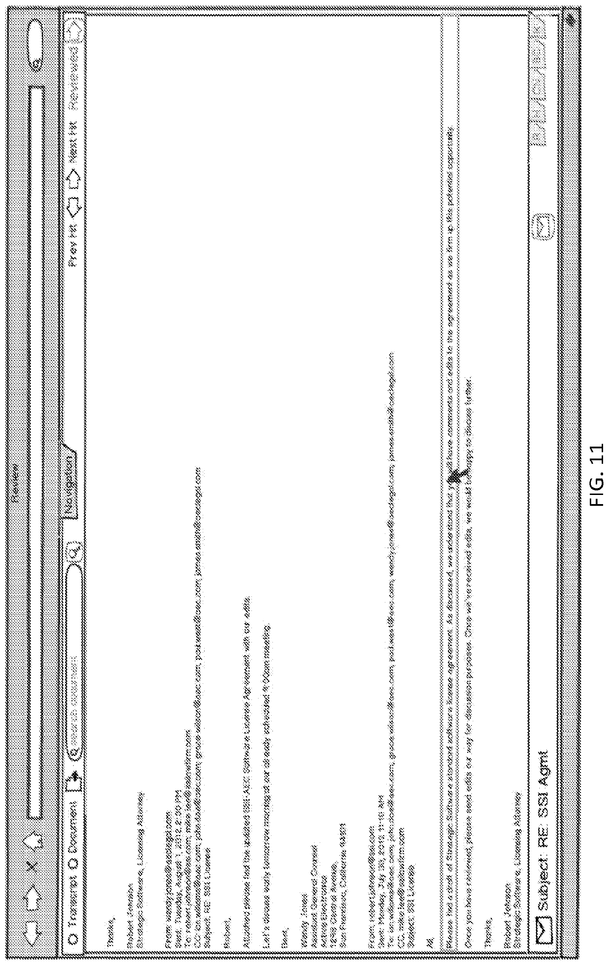

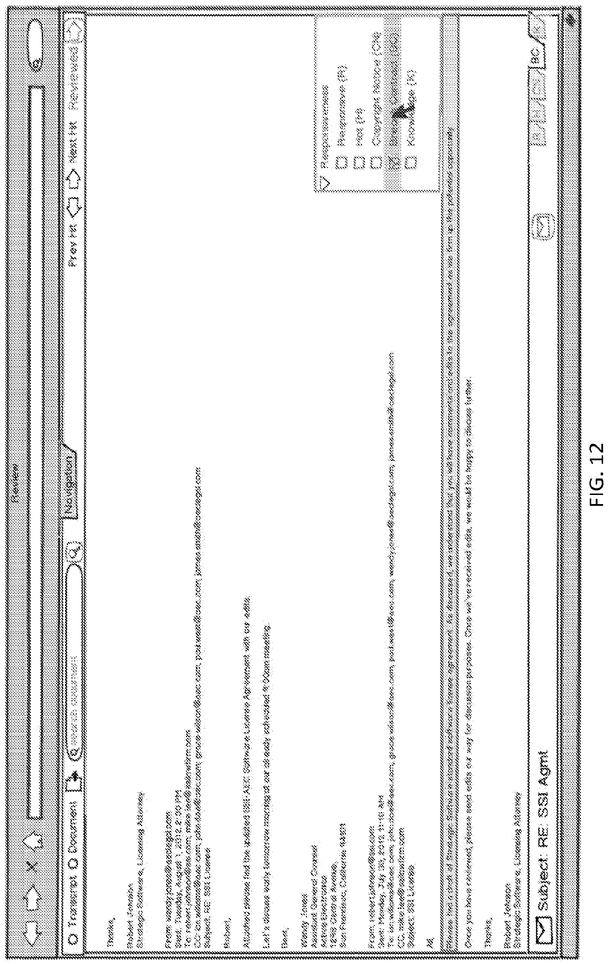

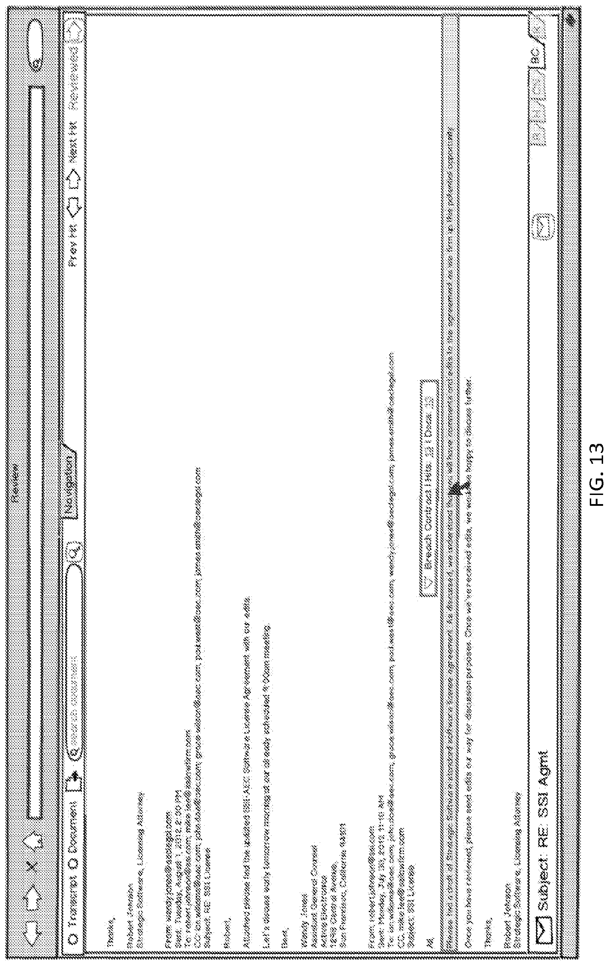

FIG. 9 is a screenshot illustrating a list of items to be reviewed. As seen in FIG. 9, all of the items are emails having the subject line ("SSI Agmt"), none of the items shown have been reviewed, and none of the items have been tagged. In FIG. 10, one item (in this case, an email) from the set of items is shown. In FIG. 11, a segment is selected (in this case: "Please find a draft of Strategic Software standard software license agreement. As discussed we understand that you will have comments and edits to the agreement as we firm up this potential opportunity.") from within the item. In FIG. 12, the selected segment is tagged by a user (in this case: "Breach Contract" from the "Responsiveness" category). FIG. 13 shows that the selected segment has been tagged and that there are 13 "hits" (or segments) in 13 "docs" (or items) matching the "Breach Contract" tag.

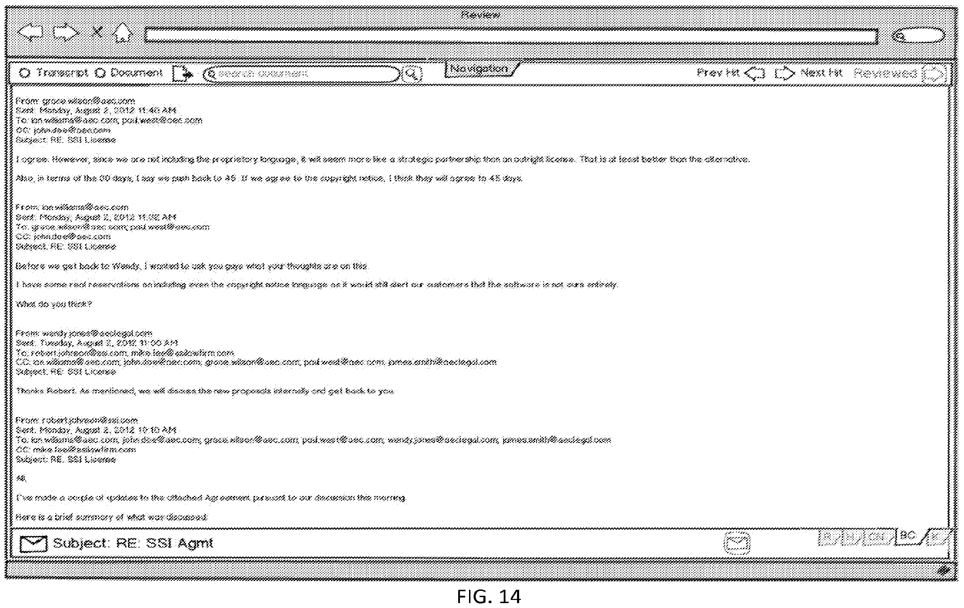

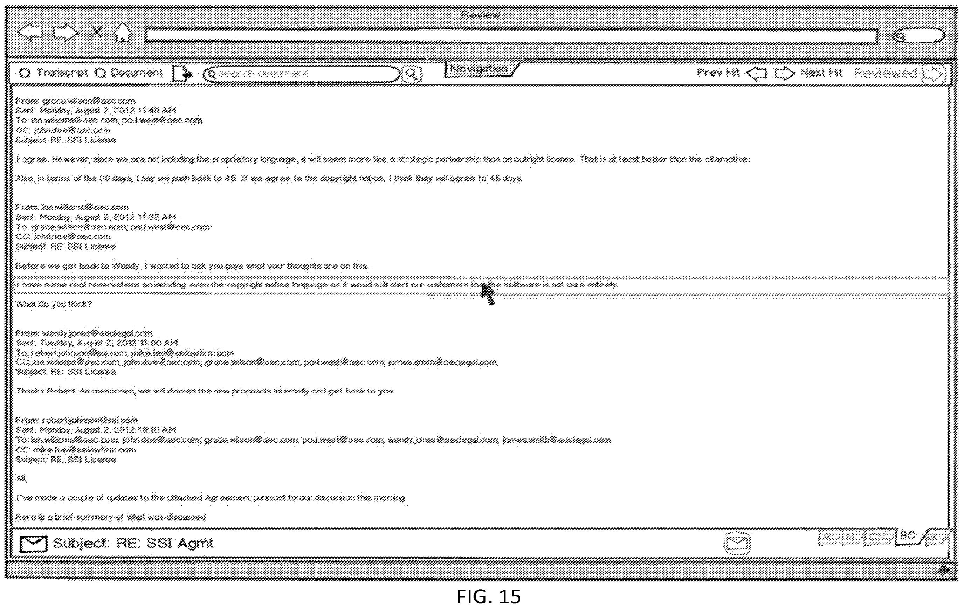

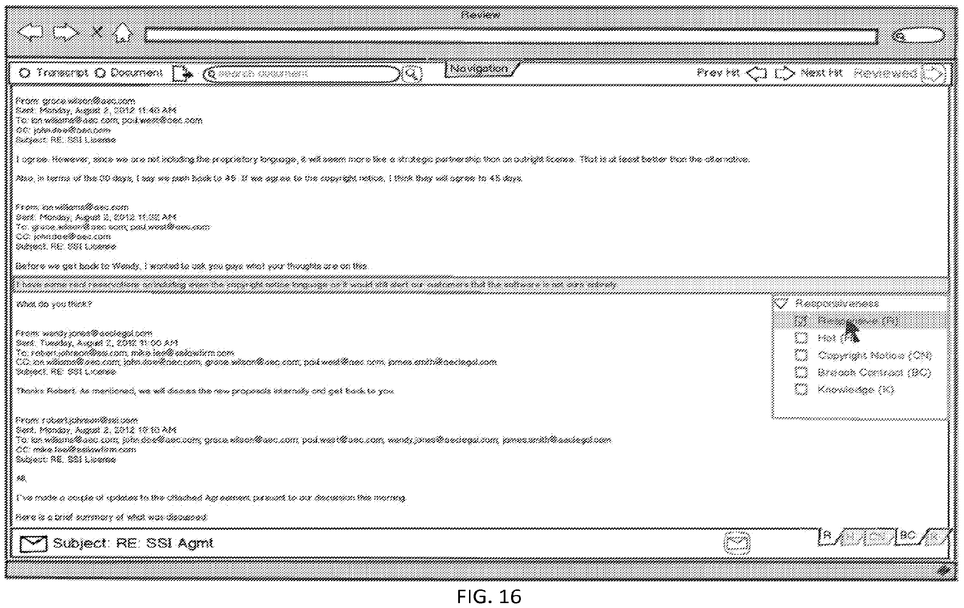

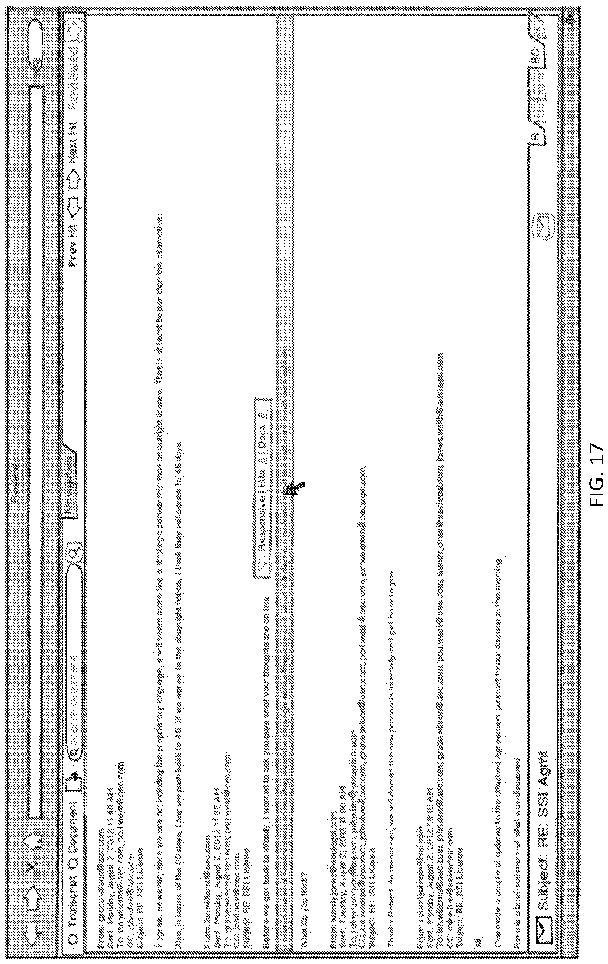

FIG. 14 shows another item in the review set as the email shown in FIG. 10. FIG. 15 shows the selection of another segment (in this case: "I have some real reservations on including even the copyright notice language as it would still alert our customers that the software is not ours entirely."). FIG. 16 shows the examiner tagging this second segment with another tag (in this case: "Responsive"). FIG. 17 shows that the selected segment has been tagged and that there are 6 hits in 6 items matching the "Breach of Contract" tag.

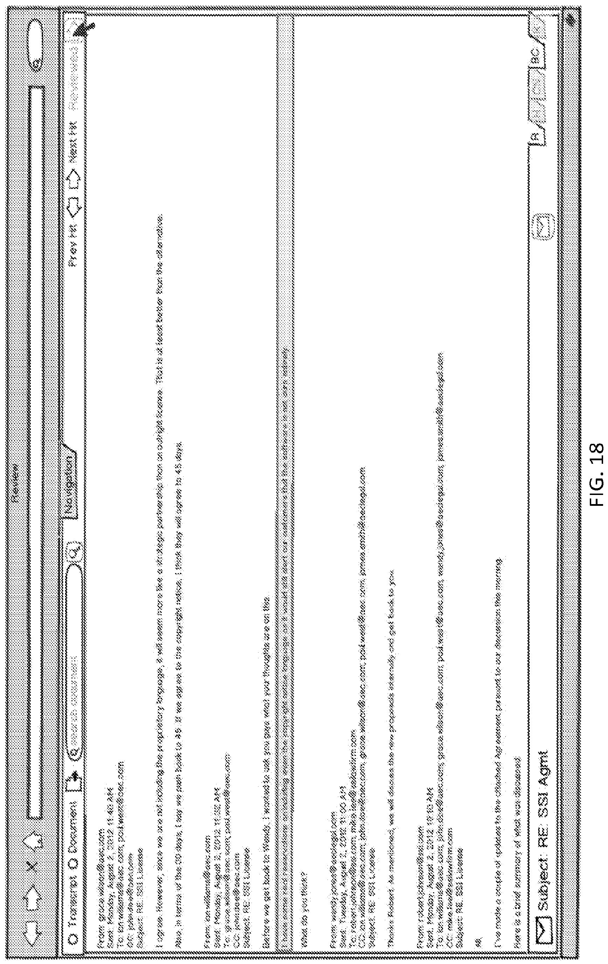

In FIG. 18, the examiner indicates that the review of the current item is complete and requests that the next item be displayed by, for example, clicking on the right arrow button, thereby causing all of the segments in the item to be marked as reviewed.

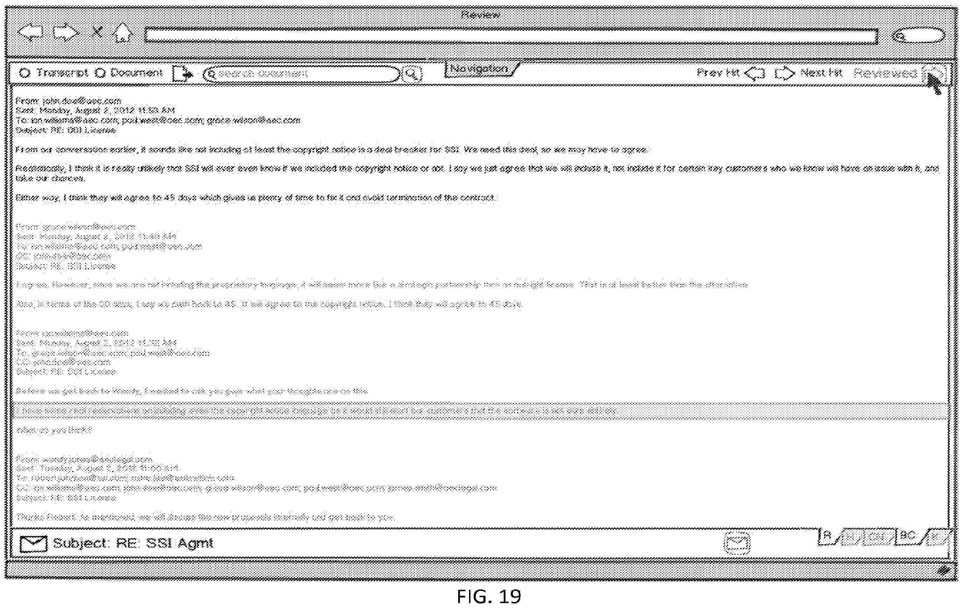

In FIG. 19, shows a next item in the collection of documents after clicking the right arrow button as shown in FIG. 18. Grafs that were previously reviewed are indicated as such (e.g., by showing the previously reviewed text in gray rather than black) and previously tagged segments are highlighted, for example, with a colored box surrounding the tagged segment. New, unreviewed text is shown in black (e.g., the top portion of the item shown in FIG. 19 including the line "From our conversation earlier, it sounds like not including at least the copyright notice is a deal breaker for SSI. We need this deal, so we may have to agree.").

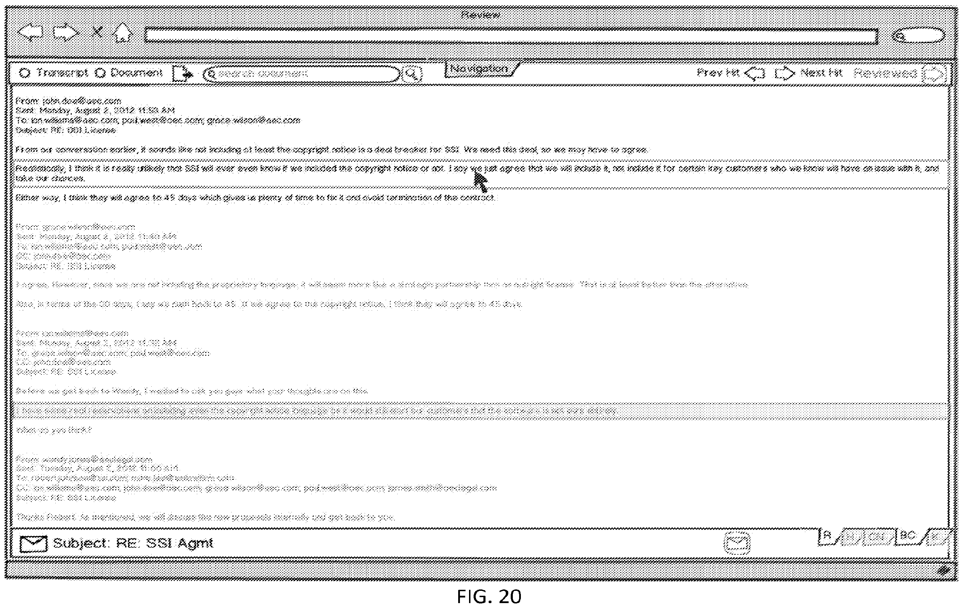

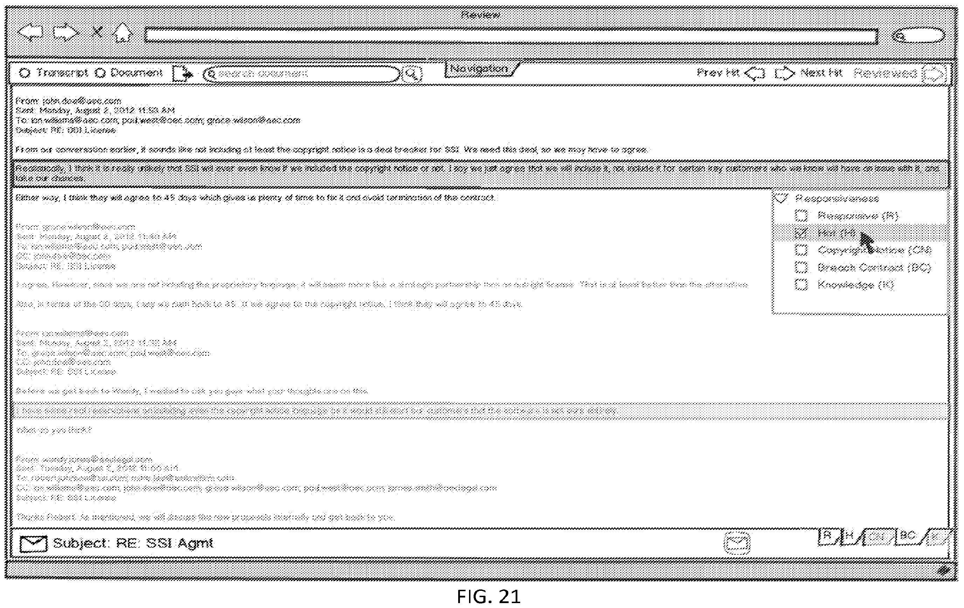

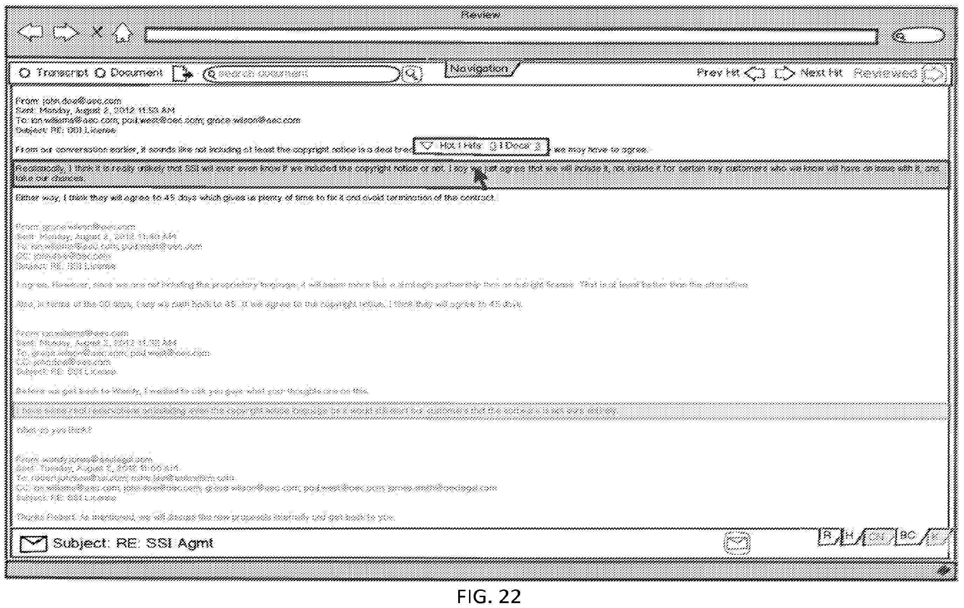

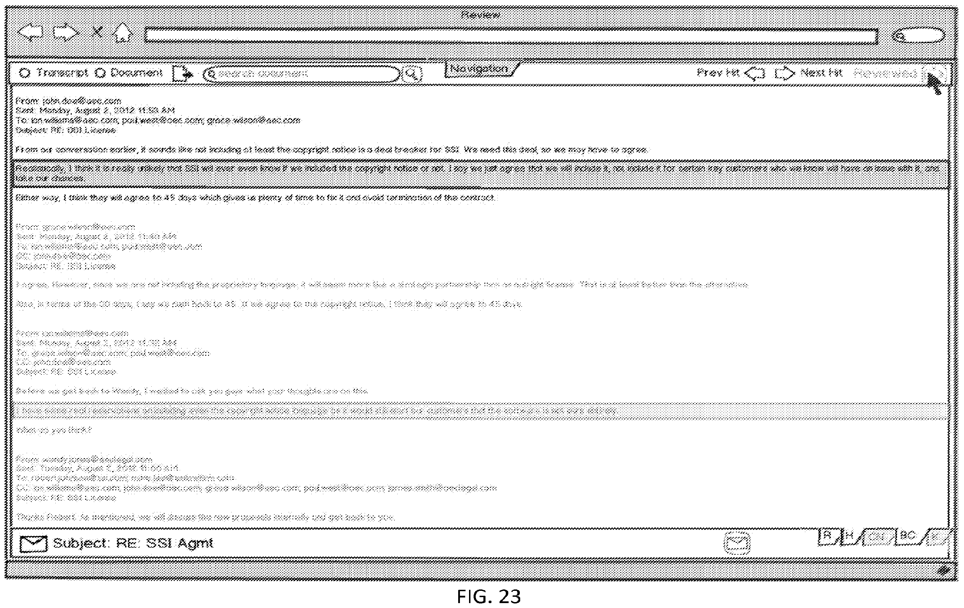

FIG. 20 is a screenshot in which a segment from the not-yet-reviewed portion of the item is selected and in FIG. 21, that segment is tagged with the flag "Hot (H)". In FIG. 22, the screen indicates that there are three hits with the tag "Hot" in three items. In FIG. 23, "Reviewed" button is selected to indicate that review of the current item is complete, thereby causing all of the segments in the item to be marked as reviewed.

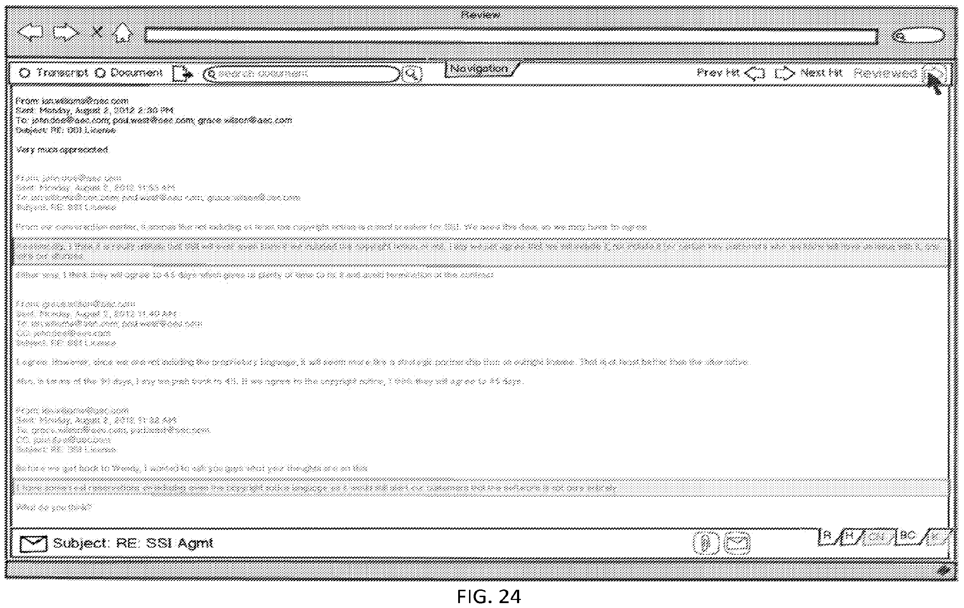

As seen in FIG. 24, all of the previously reviewed segments are displayed in gray and segments that have not yet been reviewed are shown in black. Selecting the "Reviewed" button marks all new segments in the new item as having been reviewed.

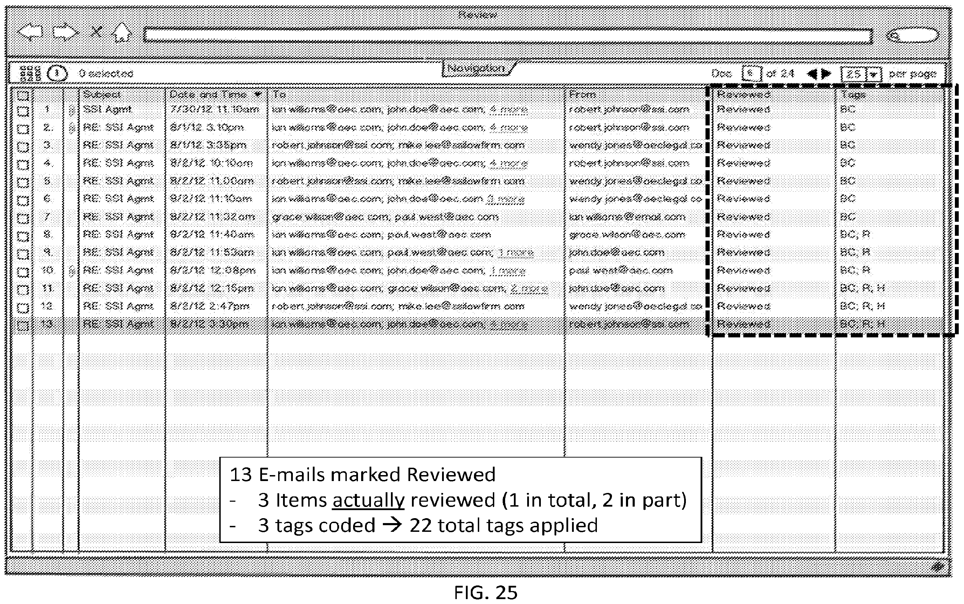

FIG. 25 is a screenshot of a user interface showing a list of the items in the review set according to one embodiment of the present invention. As shown in FIG. 25, all of the items in the set have been marked "Reviewed" and the tags applied to the items, as described above with respect to FIGS. 10 through 24, are shown in a "Tags" column (see the portion of FIG. 25 surrounded by dotted lines).

Embodiments of the present invention are also directed to a system and method for reviewing a group of items containing common segments, such as in multiple emails in a conversation in a "single view mode" or "chronograf."

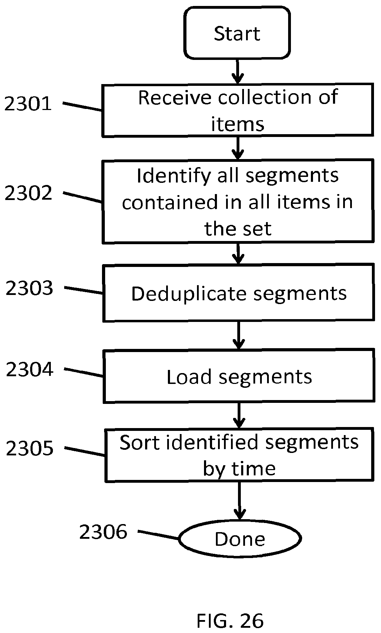

FIG. 26 is a flowchart of a method for creating a "single view" of multiple items according to one embodiment of the present invention. In operation 2301, a collection of items to be displayed in a single view is received. In operation 2302, all segments associated with the items in the collection of items are obtained by finding all entries in the table of contents 310 associated with the items. For example, if the collection of items included items having item IDs 1, 3 and 4, then all segment hashes associated with item IDS 1, 3, and 4 would be added to a table of segment hashes. Each segment in the table may be associated with an item ID, word order and time-date stamp, which would be derived from the metadata of the item. For example, in one embodiment, the timestamp of all the segments in an email would be the time at which the email was sent. The segment hashes may then be deduplicated in operation 2303 such that each segment only appears once in the table of segment hashes, and the segment that does appear is the first to occur in time, based on its associated timestamp.

The segment hashes are then used in operation 2304 to load the segments associated with the segment hashes. For example, in one embodiment, the creation timestamp of all segments in an email would be the time at which the email was sent. Grafs that have the same timestamp would be sorted by word order, so that the oldest segments appear first, in the order in which the segments appear in their associated items.

As such, the sorted list of segments may be merged to provide a single view of all unique text within a collection of items. This allows an examiner to, for example, review all portions of an email conversation spanning several different copies in a single pass. In other embodiments, the collection of items may be a collection of instant messaging logs (e.g., logs from different users containing overlapping conversations), logs from social media comment threads (e.g., Facebook® comment threads, Yammer® messages and comments, forum postings, etc.), text messaging logs, etc. Timestamps are generally included in the metadata associated with these logs, thereby allowing sorting of the segments identified in the logs.

In various embodiments of the present invention, the order in which the operations shown in FIG. 26 may be varied. For example, in some embodiments, a process for creating a "single view" includes receiving a collection of items, identifying all segments contained in all items in the collection, loading all the identified segments, sorting the loaded segments by time and segment order, and deduplicating segments in the table after sorting the segments.

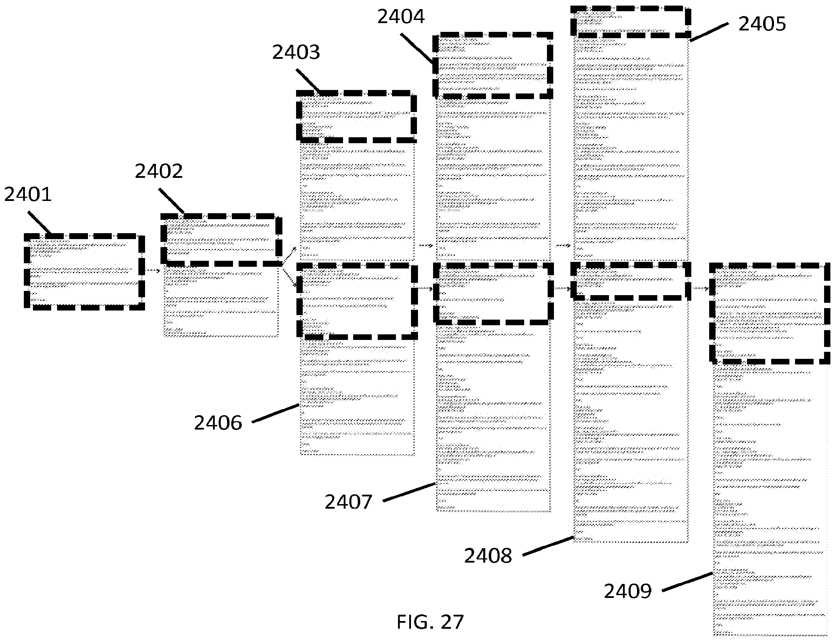

FIGS. 27 through 36 illustrate a workflow for a single view mode according to one embodiment of the present invention. FIG. 27 illustrates nine related emails 2401, 2402, 2403, 2404, 2405, 2406, 2407, 2408, and 2409 as nine separate items within a review set and the relationships between the emails. The nine emails appear in two related conversation branches. In FIG. 27, thick dashed lines highlight the newly added content of each email message

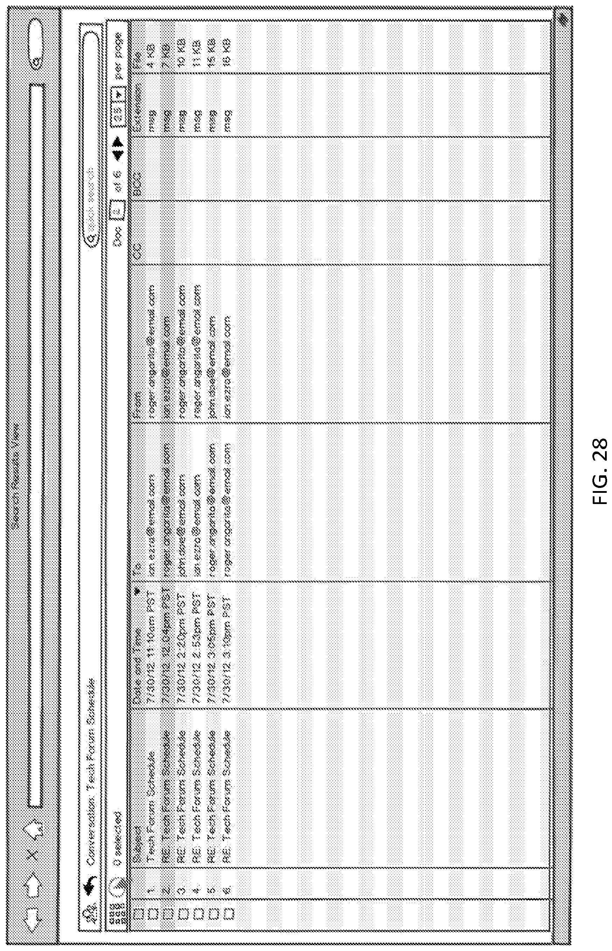

FIG. 28 illustrates a user interface for enabling a "single view" of a listed collection of items. According to one embodiment of the present invention, a user can select individual items to be included when creating the single view of items.

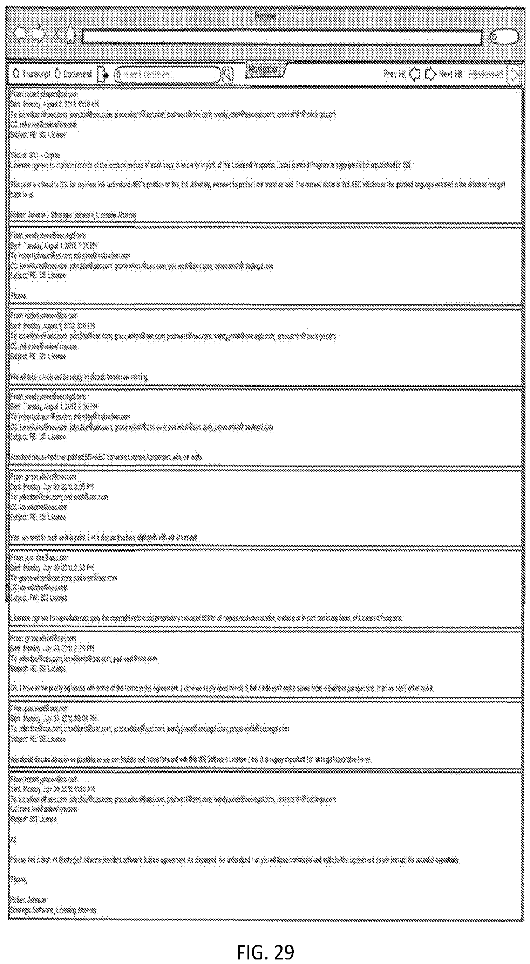

FIG. 29 illustrates a "single view" of the nine emails shown in FIG. 27, which, in one embodiment, may be produced according to the process described above with respect to FIG. 26. As shown in FIG. 29, separate items can be separated by horizontal lines.

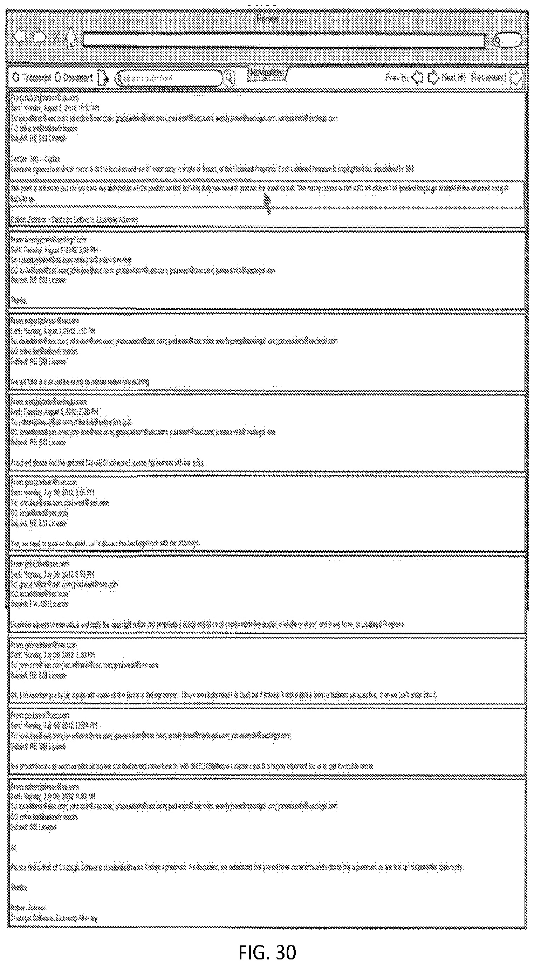

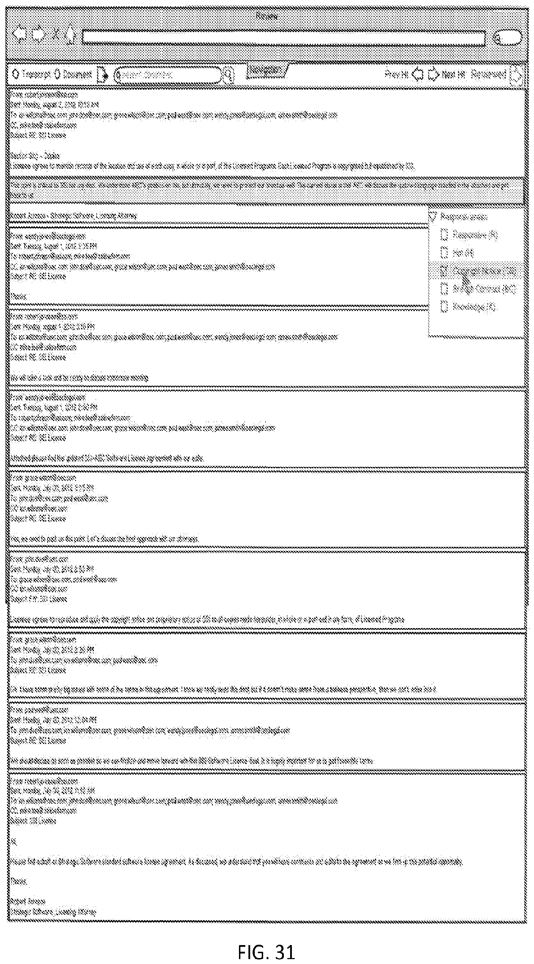

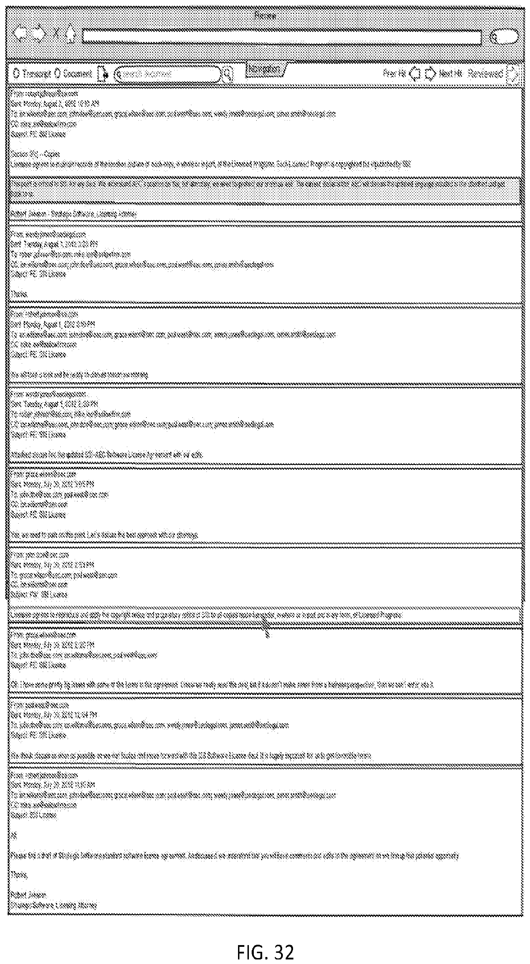

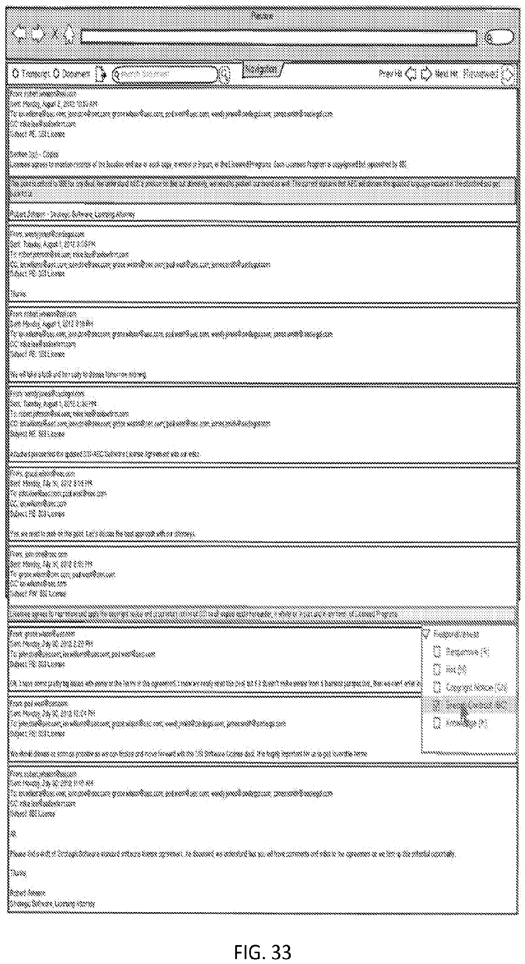

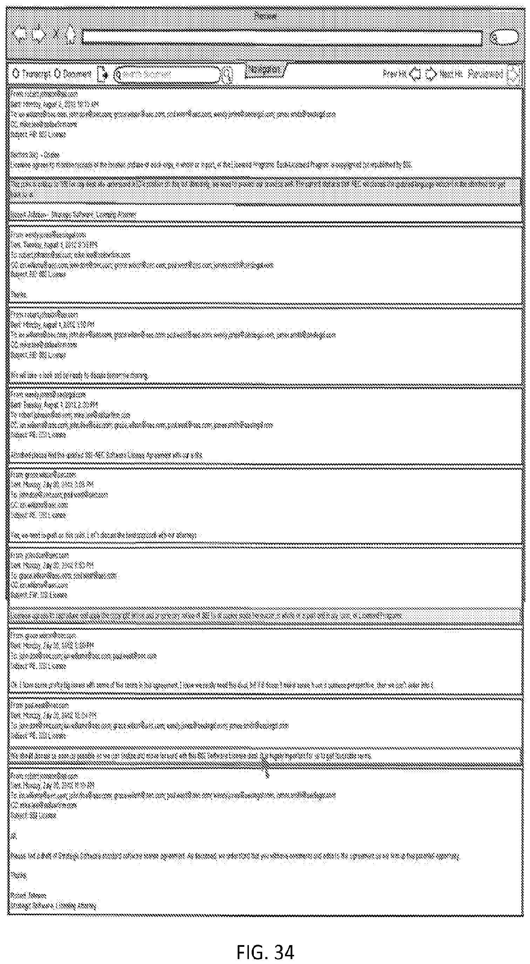

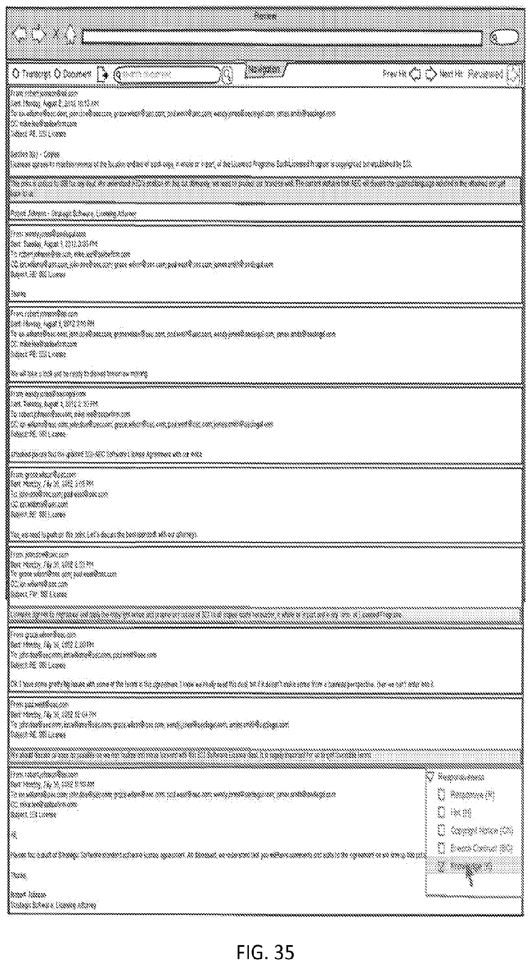

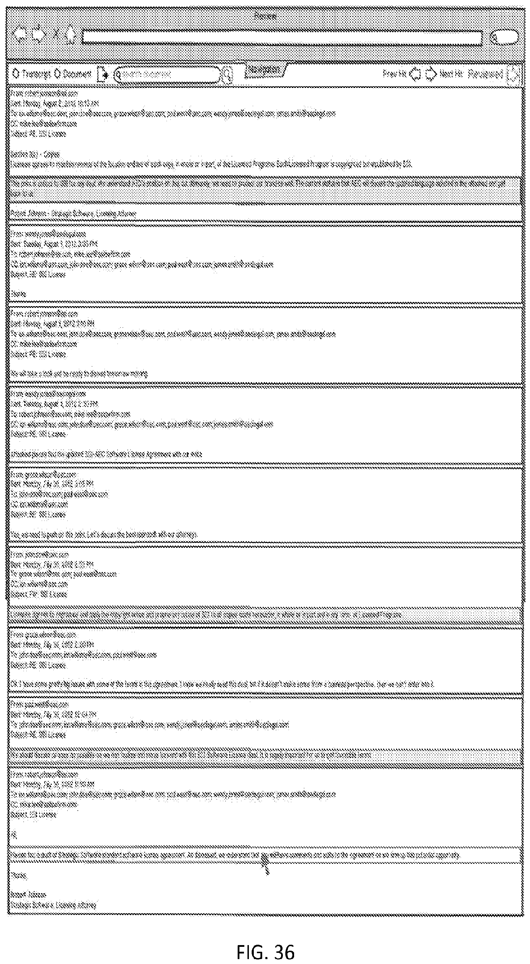

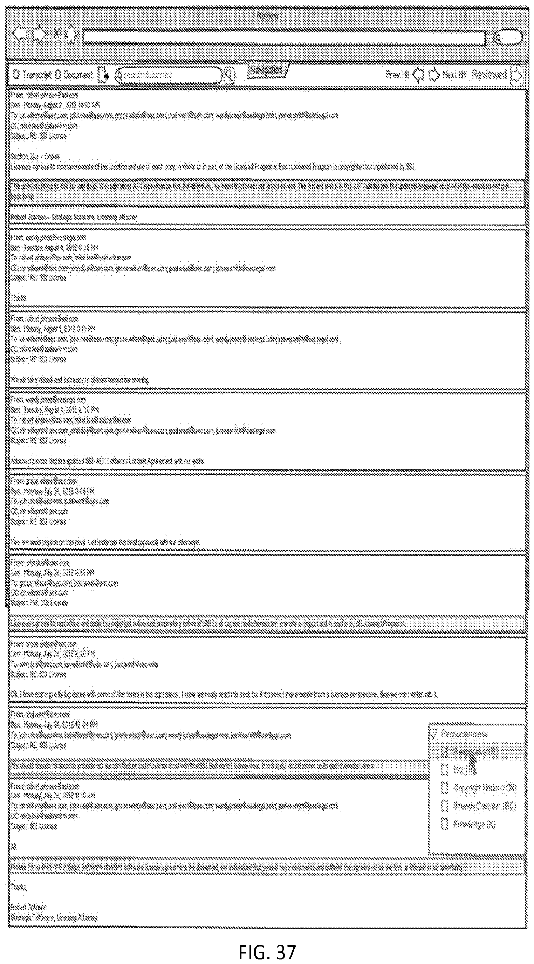

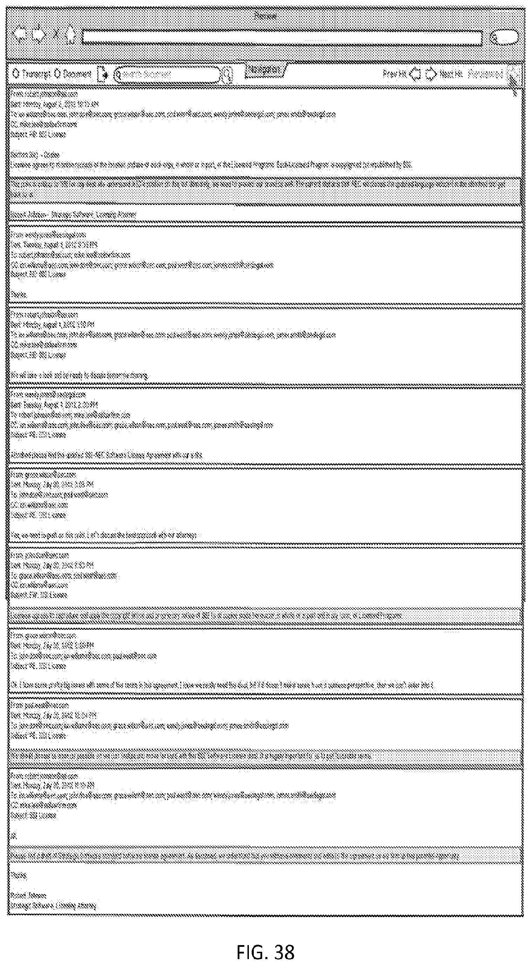

FIGS. 30 through 38 illustrate the tagging of various segments in the single view with different tags. For example, FIGS. 30 and 31 illustrate the tagging of a segment with a "Copyright Notice" tag, FIGS. 32 and 33 illustrate the tagging of another segment with a "Breach Contract" tag, FIGS. 34 and 35 illustrate the tagging of a third segment with a "Knowledge" tag, and FIGS. 36 and 37 illustrate the tagging of a fourth segment with a "Responsive" tag. FIG. 38 illustrates the activation of a command to proceed to a next step in the reviewing process.

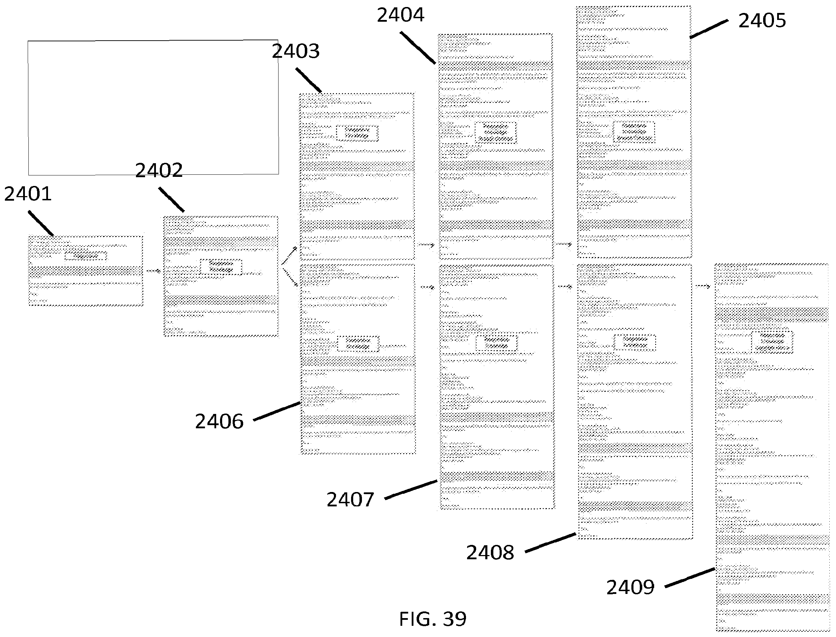

FIG. 39 is a schematic representation of the effect of tagging segments of the nine items according to one embodiment of the present invention. As seen in FIG. 39, according to one embodiment, the tagging of four segments in the single view with four different tags a total of 20 tags to be applied, and where each of the nine items was tagged at least once. In the embodiment shown, one email was tagged "Responsive", five were tagged with both "Responsive" and "Knowledge", two were tagged with "Responsive", "Knowledge", and "Breach Contract", and one was tagged with "Responsive", "Knowledge", and "Copyright Notice".

Embodiments of the present invention are also capable of stacked or "browser" style navigation. For example, an examiner may initially choose to review items serially by item ID. After reviewing several items, the examiner may come across an email that contains an interesting lead and choose to explore the entire conversation thread associated with the email and therefore initiates a single view mode on the set of items matching the subject line of the email. In single view mode, the examiner may tag a number of segments having interesting information. After reviewing all of the segments associated with the email conversation, the examiner may jump back up a level to return to the last item he or she had been reviewing serially and to continue reviewing items serially. All of the tagging performed by the examiner while in single view mode may be preserved and the tagging and "reviewed" status changes of segments caused by exploring the email conversation persist and affect the display of the items viewed serially.

As such, embodiments of the present invention track the user's viewing history and allow the user to explore various research pathways while allowing the user to easily return to earlier states.

According to one embodiment of the present invention, the system maintains a history log that stores item ID, view mode, and other information about the prior states of the examiner's view of the data. Each time a request is made to change the view, for example, by moving on to the next item, initiating single view mode, or performing a search for items containing segments matching a particular tag, the current state may be added to the history log. When a user chooses to return to an earlier viewing state, the state information may be read from the history log and used to reconstruct the earlier view.

According to one embodiment of the present invention, the history log may be implemented using a stack, as would be well understood in the art of web browsers and user interface design.

For example, according to one embodiment, each record in the stack of records may contain the entire list of items that the user was reviewing and the currently selected item and segment. The record may also contain all the details about the viewing state, in order that the user could be returned to the exact viewing state they were in before they branched their review.

Some embodiments of the present invention may be used to assist in the translation of items. Language translation, like item review, is normally done on an item basis, but translations suffer from the similar problems where there are many different copies of the same text in different items. Similar items containing only minor changes to some paragraphs may be translated more efficiently by identifying only the changed portions and retranslating only those changed portions. The segment technique according to embodiments of the present invention can provide a solution to this problem. When a segment is translated, these translations can be stored and shown in lieu of the original. In this context, it may be more useful for each segment to correspond to a single sentence. Therefore, even if the segment is only similar to a translated segment, the translation of the similar segment can be shown, which would save translation costs. Thus, even translation of small segments can have a large effect on many different reviewers who are not native speakers.

Embodiments of the present invention may be used to allow organizations to store, centralize, search, and receive business intelligence on archived items. According to one embodiment, such a system would build a segment table of contents 310 that included all segments found in any list of items. The table of contents 310 would include the segments themselves, their relationships to each other, the item they were found in, segment hash, and other details.

According to various embodiments of the present invention, archiving may be accomplished by: storing the original item in a segment index; not storing original item, but instead storing a list of entries with a segment database; and storing only the clustered items in a chronograf (or "single view") along with a segment database.

Some embodiments of the present invention are directed to providing version comparison and showing item evolution through versions, similar to a "Track Changes" view or a "diff" between two files. Embodiments of the present invention allow a user to view and track the changes to portions of documents (e.g., various provisions in contracts) across multiple versions. Embodiments of the present invention also allow a user to review changes in a document and how those changes persist over time.

When a group of documents is broken into segments, each segment may be associated with a date of first occurrence (or the version number that the segment first appeared in) in addition to a position as to segment placement in an item (i.e. 5^{th} segment, 10^{th} segment, etc.). Thus, embodiments of the present invention can reconstruct the evolution and changes in an item by mapping these changes in a modified chronograf view (or "single view"). This chronograf view would allow analysis of versions of items (e.g., documents, contracts, etc.), to better understand how multiple versions have changed over time. This view would preserve the order of the root (earliest in time) item, and add any new segments found in later items in place so that a user can see how a segment was edited across multiple versions.

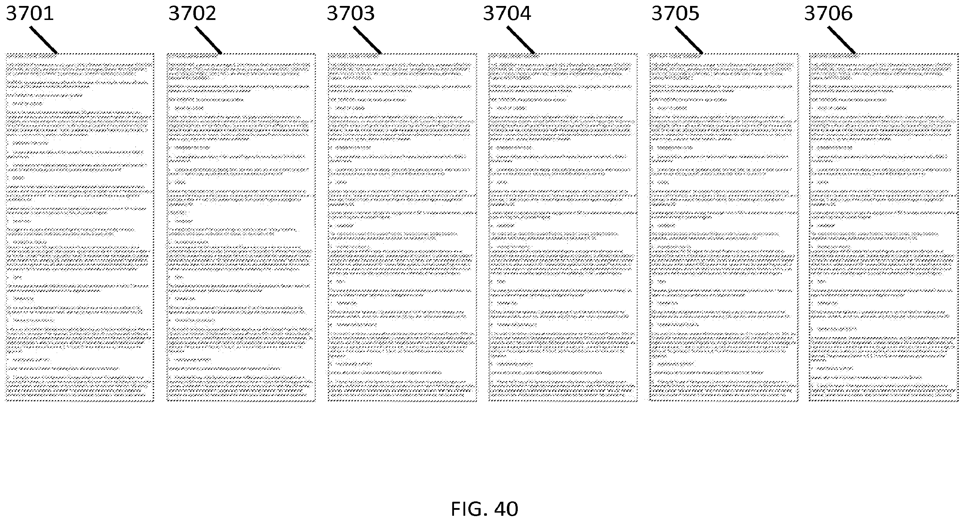

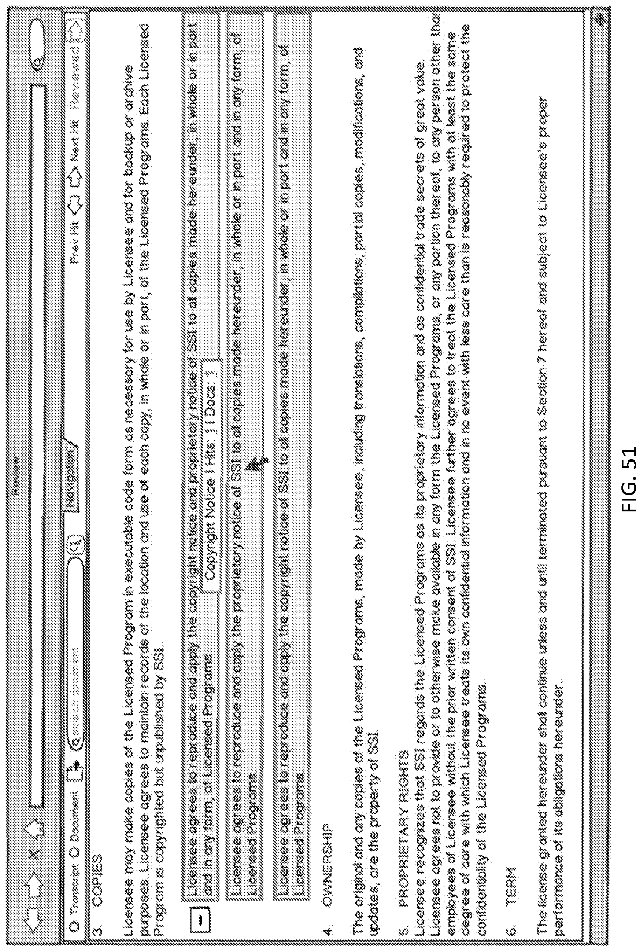

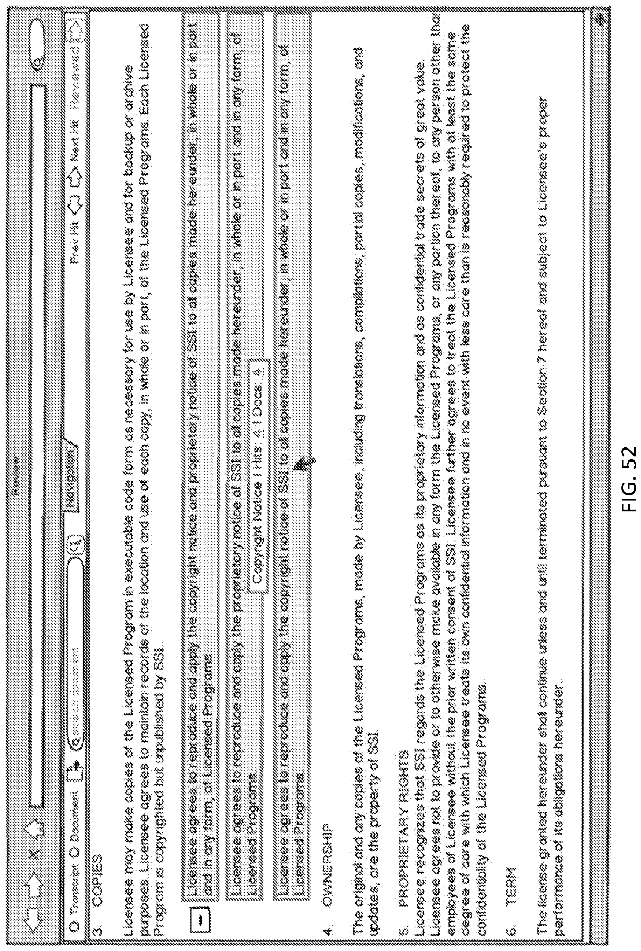

One example of a chronograf view for reviewing and tagging multiple versions of an item will be described in more detail with reference to FIGS. 40 through 52. FIG. 40 is an illustration of six items 3701, 3702, 3703, 3704, 3705, and 3706 that represent six different versions of a contract, where the versions progress in time from left to right (earlier timestamps to later timestamps).

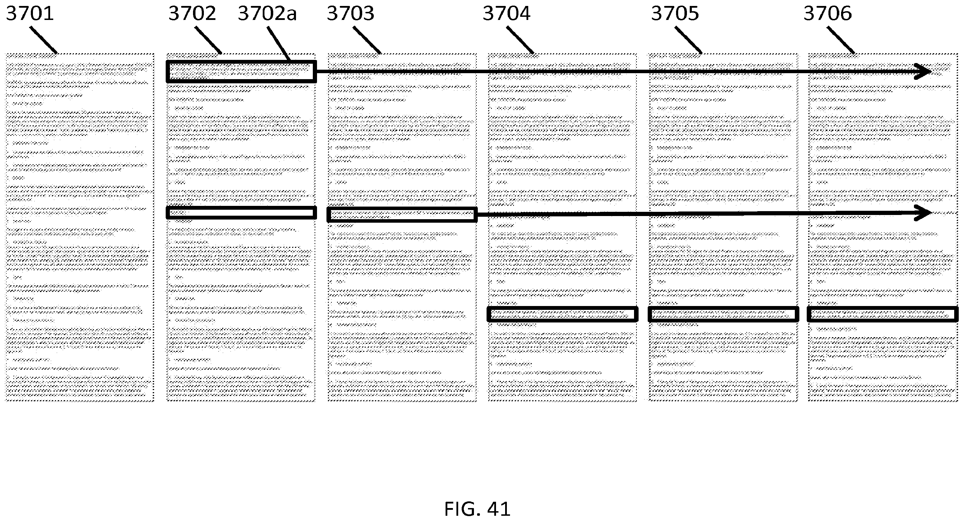

FIG. 41 is an illustration of changes made to items 3701, 3702, 3703, 3704, 3705, and 3706. Newly introduced changes are indicated by a thick line and an arrow extending through later versions (versions to the right) indicate that the change persisted through later versions. For example, modified segment 3702a of item 3702 differs from the segment located in a corresponding position in item 3701, but the segment remains the same through items 3703, 3704, 3705, and 3706.

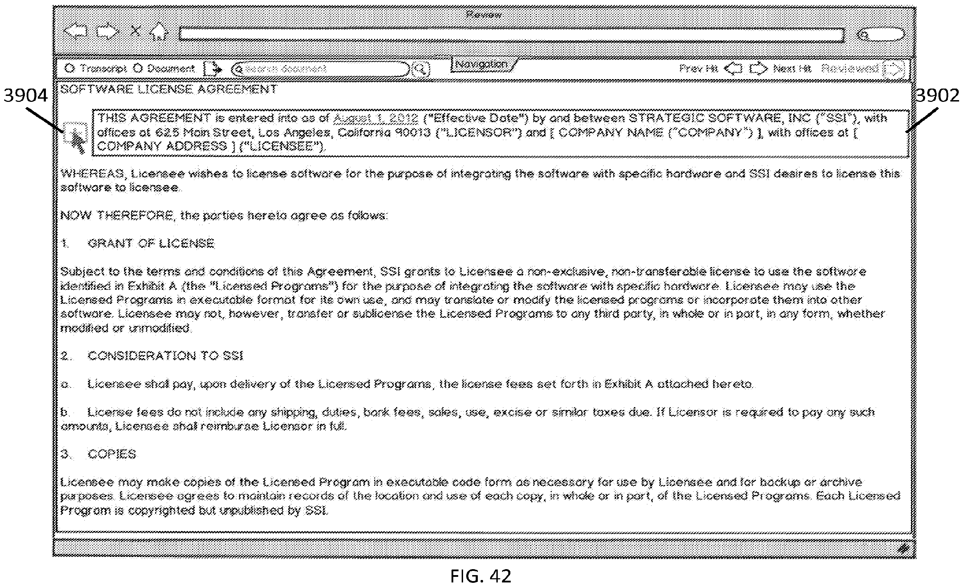

FIGS. 42 through 52 are screenshots of a user interface for reviewing and tagging multiple versions of an item according to one embodiment of the present invention. Referring to FIG. 42, when reviewing an item that includes a segment having multiple versions 3902, an icon (or control) 3904 indicating that multiple versions exist is displayed adjacent the segment 3902. In other embodiments, segments having multiple versions are highlighted (e.g., displayed in a different color, a different font, or surrounded by a box or other indicator) to differentiate such segments from segments that do not have multiple versions.

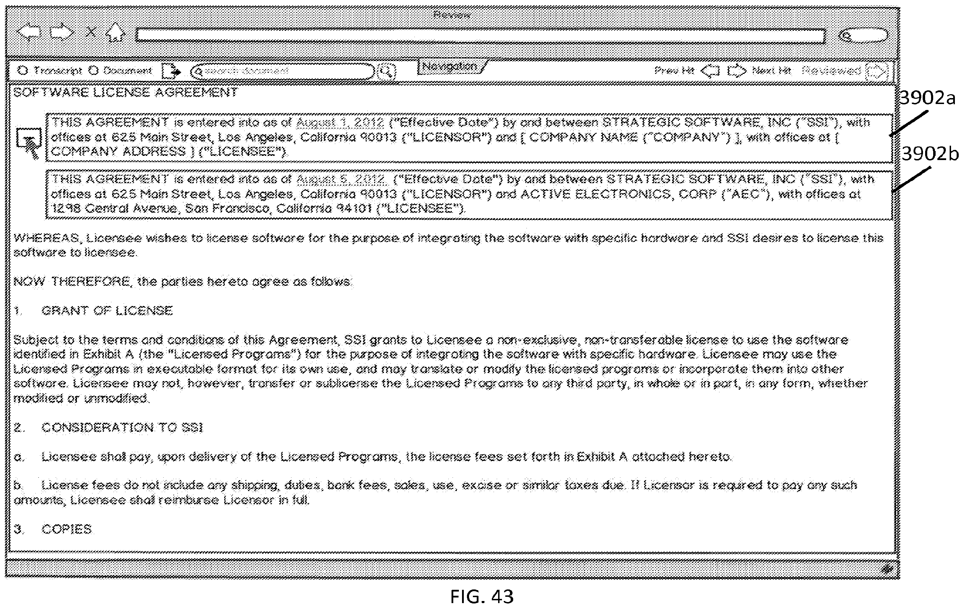

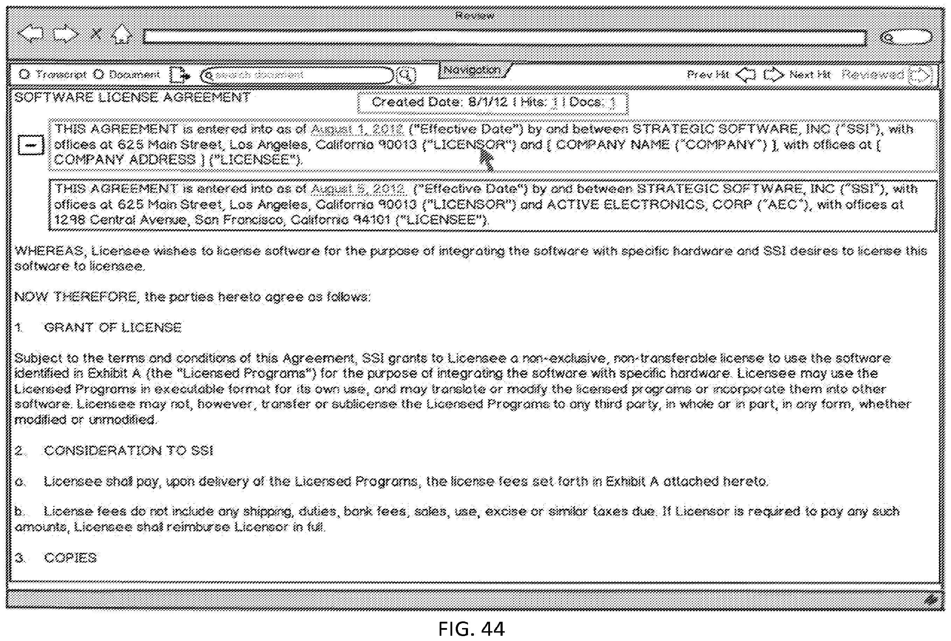

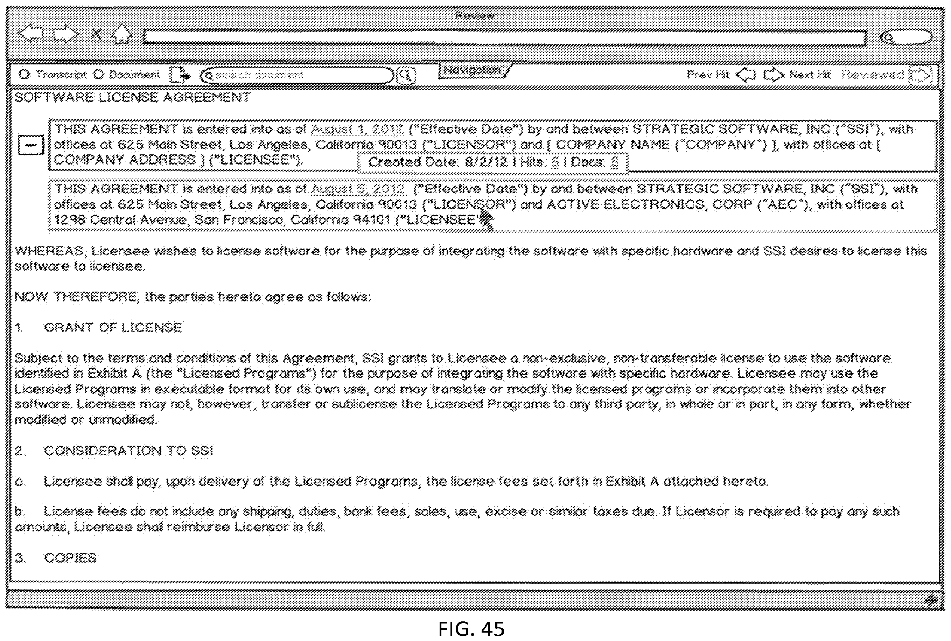

Referring to FIG. 43, when icon 3904 is activated, the segment 3902 is expanded and each available version displayed as segments 3902a and 3902b. Referring to FIGS. 44 and 45, activating (e.g., hovering a cursor over) each version of the segments shows the date of creation of that segment along with the number of hits for that segment (e.g., then number of times the segment appears in any item) along with the number of items in which the highlighted segment appears at least once.

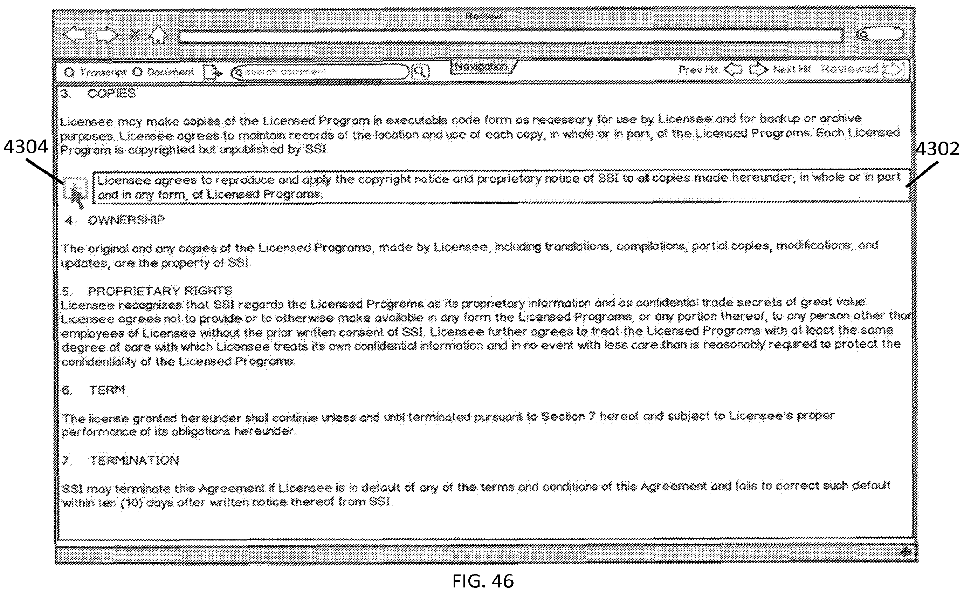

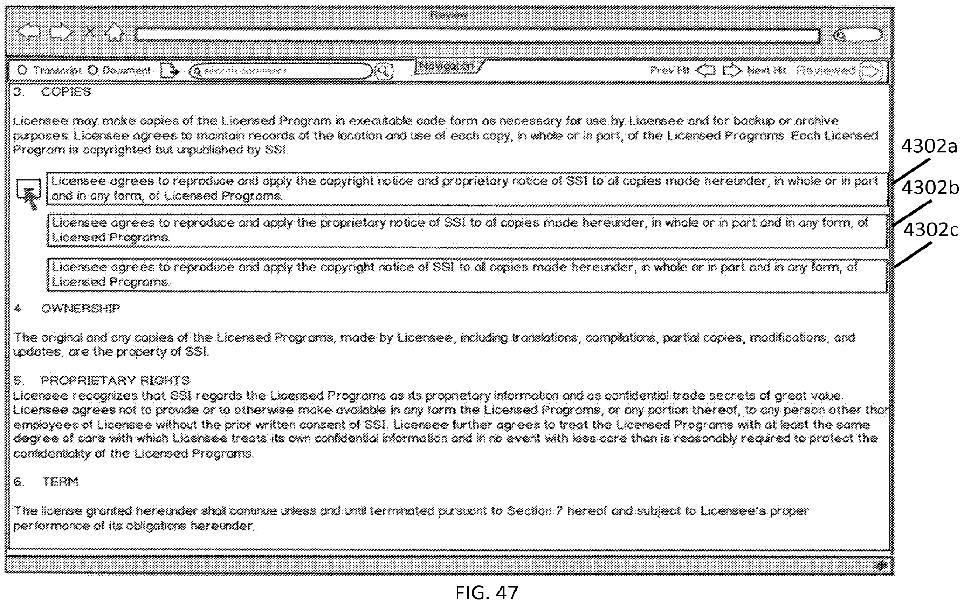

As another example, referring to FIG. 46, another segment 4302 having multiple versions may also be indicated by an icon 4304. Referring to FIG. 47, when the segment 4302 is expanded, other versions of the segment are displayed as segments 4302a, 4302b, and 4302c.

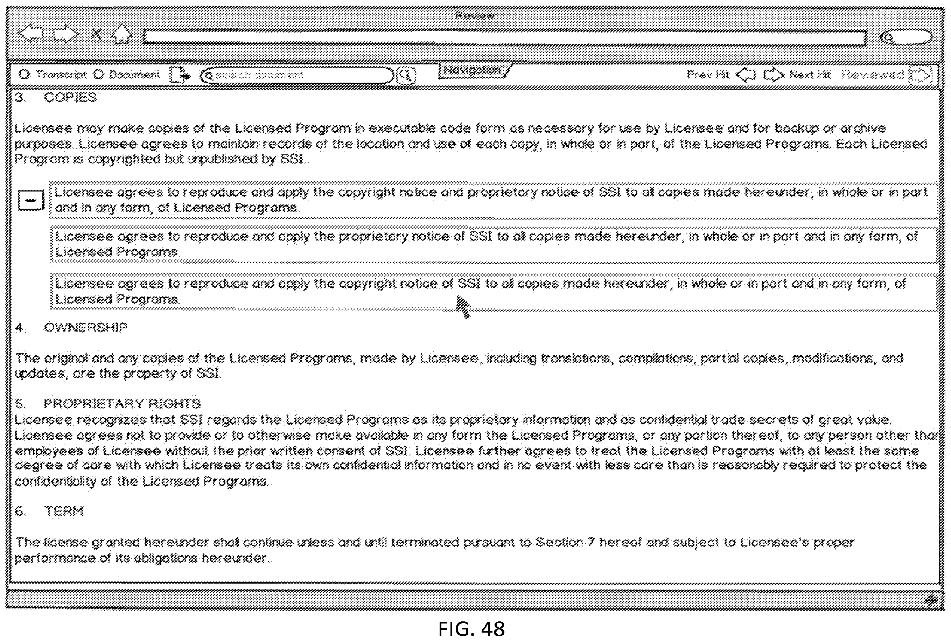

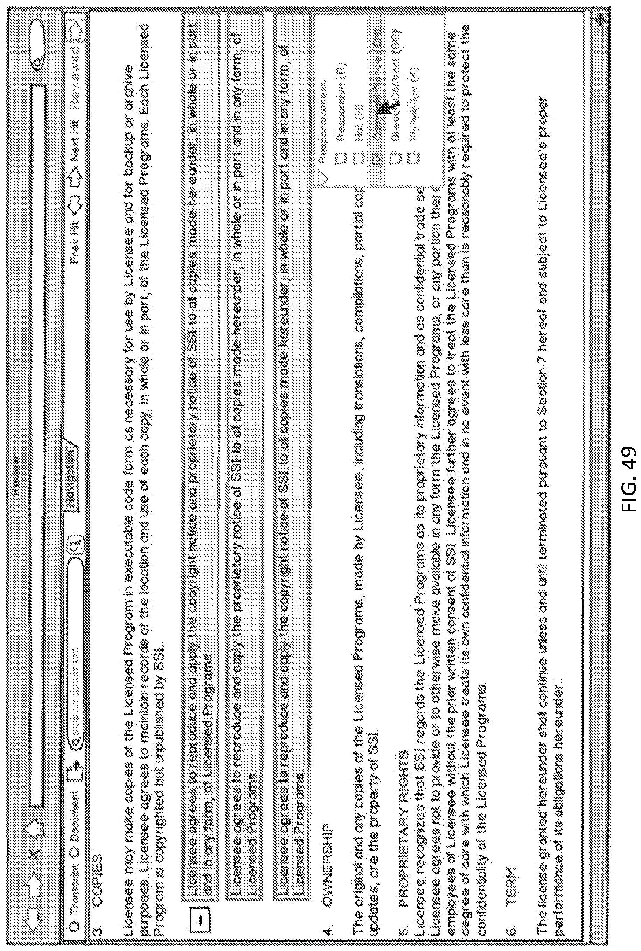

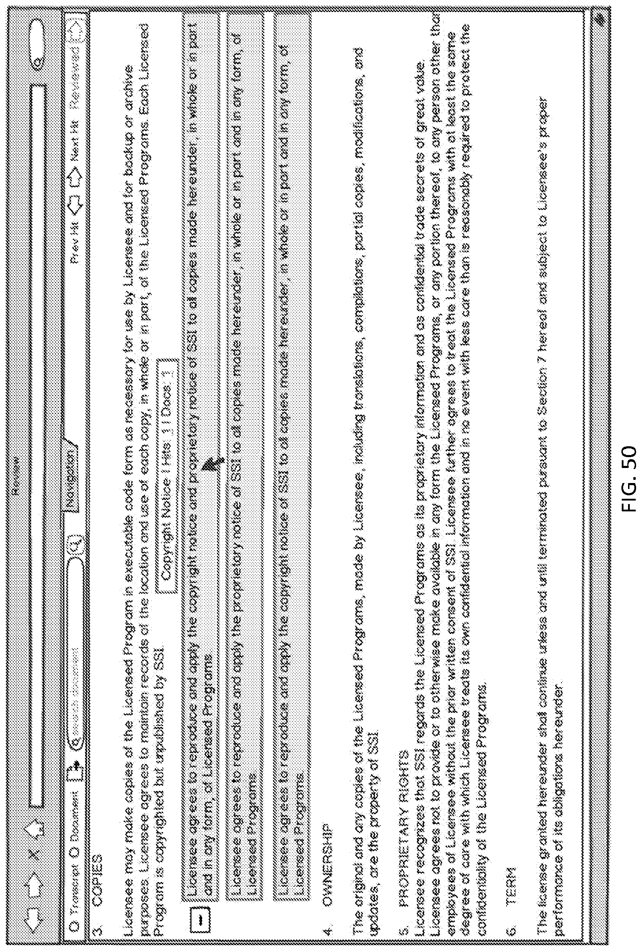

Referring to FIG. 48, one or more of the segments 4302a, 4302b, and 4302c can be selected for tagging. In FIG. 48, all three of the segments 4302a, 4302b, and 4302c are selected. In FIG. 49, all three of the segments 4302a, 4302b, and 4302c are tagged with the "Copyright Notice" tag, and in FIGS. 50 through 52, selecting each of the segments 4302a, 4302b, and 4302c shows the tag associated with each of the segments (here, the "Copyright Notice" tag), along with the number of hits and the number of docs for each of the segments 4302a, 4302b, and 4302c.

While the present invention has been described in connection with certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A method for processing a plurality of electronic items, each item of the electronic items being a document file, an image file, an audio file, a video file, or an email, the method comprising:
for each item of the electronic items, each item being associated with an item identifier, segmenting, on a processing device comprising a processor and memory, each item into a plurality of segments, each of the segments being a logical subunit of the item, and for each segment of the plurality of segments:
hashing the segment to produce a segment hash value;
determining whether the segment hash value exists in a first table;
in response to determining that the segment hash value does not exist in the first table, creating a new entry for the segment in the first table, wherein the entry associates the segment hash value with the segment; and
adding an entry to a second table, the entry comprising the item identifier, metadata related to the segment in the item, and the segment hash value; and
outputting, from the processing device, the first table and the second table.

2. The method of claim 1, wherein the segmenting each item into a plurality of segments comprises:
detecting an alias in the item, the alias being one of one or more particular text strings or a class of strings; and
replacing the detected alias with a canonical name corresponding to the alias.

3. The method of claim 2, wherein the alias is one of a name, an address, a telephone number, an account name, an account number, a date, a credit card number, a social security number, an e-mail address, and a user defined pattern.

4. The method of any of claims 2-3, wherein the item comprises text, the text comprising a plurality of paragraphs and wherein each of the plurality of segments corresponds to one of the paragraphs.

5. The method of any of claims 1-4, wherein the item comprises an image and wherein hashing the image comprises:
scaling the image to have a first dimension equal to a normalized image size;
padding the image to have a second dimension equal to the normalized image size; and
computing the segment hash value of the scaled and padded image.

6. The method of any of claims 1-5 further comprising:
receiving, on a processing device, a request to display a first item of the items;
retrieving, from the second table, a first list of segments associated with the first item;
retrieving, from the first table, a first plurality of segments corresponding to the first list of segments; and
outputting the first plurality of segments.

7. The method of claim 6, further comprising:
receiving a request to tag a first segment of the first plurality of segments of the first item with a tag;
storing the tag in an entry associated with the first segment; and
storing the entry in a tag table.

8. The method of claim 7, wherein the tag stored in the entry in the tag table is an indication that the first segment has been reviewed.

9. The method of claim 7, further comprising:
loading, from the database, a second plurality of segments associated with a second item of the items, the second plurality of segments comprising the first segment;
loading the entry associated with the first segment; and
displaying the second plurality of segments and the tag stored in the entry associated with the first segment.

10. The method of claim 6, wherein each of the segments has a timestamp and wherein the request further comprises a request to display a second item of the items, the method further comprising:
retrieving the second item;
aggregating the segments of the first item and the segments of the second item;
sorting the aggregated segments by timestamp;
removing duplicate segments to produce a reduced list of segments; and
displaying the reduced list of segments, sorted by timestamp.

11. The method of claim 6, further comprising:
searching the plurality of items, the searching comprising:
receiving a search query;
searching the first table for entries matching the search query; and
returning a plurality of matching entries, wherein the first item comprises at least one segment associated with a corresponding one of the matching entries.

12. The method of claim 11, further comprising
receiving a selection of a segment of the matching segments; and
returning a plurality of items containing the selected segment.

13. The method of claim 6, further comprising:
displaying a list of items being a subset of the plurality of items, the list of items comprising the first item, and the first item having a first item identifier;
displaying the first plurality of segments;
receiving a request to display a second item;
saving position information, the position information comprising the list of items, the first item identifier, and a segment hash;
displaying the second item;
loading the position information; and
displaying the first item in accordance with the position information.

14. The method of any of claims 1-13 further comprising:
computing, on the processing device, a plurality of similarities between segments of the plurality of segments;
clustering, on the processing device, the plurality of segments into a plurality of clusters in accordance with the computed similarities, each of the clusters comprising a plurality of similar segments of the plurality of segments; and
displaying a cluster of the plurality of clusters.

15. The method of an of claims 1-14 further comprising:
identifying, on the processing device, a translated segment in a second language in a translation table in accordance with a corresponding segment hash value, the identified translated segment corresponding to a segment in a first language of the plurality of segments; and
displaying the identified translated segment.

16. A system for processing a plurality of electronic items, each item of the electronic items being a document file, an image file, an audio file, a video file, or an email, the system comprising:
a database running on a computer, the database being configured to store a first table and a second table;
a processing device configured to:
segment each item into a plurality of segments, each of the segments being a logical subunit of the item, each item being associated with an item identifier;
for each segment of the plurality of segments:
hash the segment to produce a segment hash value;
determine whether the segment hash value exists in a first table;
in response to determining that the segment hash value does not exist in the first table, create a new entry for the segment in the first table, wherein the entry associates the segment hash value with the segment; and
add an entry to the second table, the entry comprising the item identifier and the segment hash value.

## Patentansprüche

1. Verfahren zum Verarbeiten einer Mehrzahl von elektronischen Elementen, wobei jedes Element der elektronischen Elemente eine Dokumentdatei, eine Bilddatei, eine Audiodatei, eine Videodatei oder eine E-Mail ist, wobei das Verfahren umfasst:
für jedes Element der elektronischen Elemente, wobei jedes Element mit einer Artikelkennung assoziiert ist, segmentieren, auf einer Verarbeitungsvorrichtung, die einen Prozessor und Speicher umfasst, jedes Element in eine Mehrzahl von Segmenten, wobei jedes der Segmente eine logische Untereinheit des Elements ist, und für jedes Segment der Mehrzahl von Segmenten:
Hashen des Segments, um einen Segment-Hash-Wert zu erzeugen;
Bestimmen, ob der Segment-Hash-Wert in einer ersten Tabelle vorhanden ist;
als Antwort auf ein Bestimmen, dass der Segment-Hash-Wert in der ersten Tabelle nicht existiert, Erstellen eines neuen Eintrags für das Segment in der ersten Tabelle, wobei der Eintrag den Segment-Hash-Wert mit dem Segment assoziiert; und
Hinzufügen eines Eintrags zu einer zweiten Tabelle, wobei der Eintrag die Artikelkennung, Metadaten, die sich auf das Segment in dem Element beziehen, und den Segment-Hash-Wert umfasst; und
Ausgeben, von der Verarbeitungsvorrichtung, der ersten Tabelle und der zweiten Tabelle.

2. Verfahren gemäß Anspruch 1, wobei ein Segmentieren jedes Elements in eine Mehrzahl von Segmenten umfasst:
Erfassen eines Alias in dem Element, wobei der Alias eine von einer oder mehreren bestimmten Textzeichenketten oder einer Klasse von Zeichenketten ist; und
Ersetzen des erfassten Aliases durch einen kanonischen Namen, der dem Alias entspricht.

3. Verfahren gemäß Anspruch 2, wobei der Alias einer von einem Namen, einer Adresse, einer Telefonnummer, einem Kontonamen, einer Kontonummer, einem Datum, einer Kreditkartennummer, einer Sozialversicherungsnummer, einer E-Mail-Adresse und einem benutzerdefinierten Muster ist.

4. Verfahren gemäß einem der Ansprüche 2-3, wobei das Element Text umfasst, wobei der Text eine Mehrzahl von Absätzen umfasst und wobei jedes der Mehrzahl von Segmenten einem der Abschnitte entspricht.

5. Verfahren gemäß einem der Ansprüche 1-4, wobei das Element ein Bild umfasst und wobei das Hashen des Bildes umfasst:
Skalieren des Bildes, um eine erste Dimension zu erhalten, die einer normalisierten Bildgröße entspricht;
Auffüllen des Bildes, um eine zweite Dimension zu erhalten, die der normalisierten Bildgröße entspricht; und
Berechnen des Segment-Hash-Wertes des skalierten und aufgefüllten Bildes.

6. Verfahren gemäß einem der Ansprüche 1-5, ferner umfassend:
Empfangen, auf einer Verarbeitungsvorrichtung, einer Anforderung, ein erstes Element der Elemente anzuzeigen;
Abrufen, aus der zweiten Tabelle, einer ersten Liste von Segmenten, die mit dem ersten Element assoziiert sind;
Abrufen, aus der ersten Tabelle, einer ersten Mehrzahl von Segmenten, die der ersten Liste von Segmenten entsprechen; und
Ausgeben der ersten Mehrzahl von Segmenten.

7. Verfahren gemäß Anspruch 6, ferner umfassend:
Empfangen einer Anforderung, ein erstes Segment der ersten Mehrzahl von Segmenten des ersten Elements mit einem Tag zu versehen;
Speichern des Tags in einem Eintrag, der mit dem ersten Segment assoziiert ist; und
Speichern des Eintrags in einer Tag-Tabelle.

8. Verfahren gemäß Anspruch 7, wobei das in dem Eintrag in der Tag-Tabelle gespeicherte Tag ein Hinweis darauf ist, dass das erste Segment überprüft wurde.

9. Verfahren gemäß Anspruch 7, ferner umfassend:
Laden, aus der Datenbank, einer zweiten Mehrzahl von Segmenten, die mit einem zweiten Element der Elemente assoziiert sind, wobei die zweite Mehrzahl von Segmenten das erste Segment umfasst;
Laden des Eintrags, der mit dem ersten Segment assoziiert ist; und
Anzeigen der zweiten Mehrzahl von Segmenten und des Tags, das in dem dem ersten Segment zugeordneten Eintrag gespeichert ist.

10. Verfahren gemäß Anspruch 6, wobei jedes der Segmente einen Zeitstempel hat und wobei die Anforderung ferner eine Anforderung zum Anzeigen eines zweiten Elements der Elemente umfasst, wobei das Verfahren ferner umfasst:
Abrufen des zweiten Elements;
Aggregieren der Segmente des ersten Elements und der Segmente des zweiten Elements;
Sortieren der aggregierten Segmente nach Zeitstempel;
Entfernen doppelter Segmente, um eine reduzierte Liste von Segmenten zu erzeugen; und
Anzeigen der reduzierten Liste der Segmente, sortiert nach Zeitstempel.

11. Verfahren gemäß Anspruch 6, ferner umfassend:
Durchsuchen der Mehrzahl von Elementen, wobei das Durchsuchen umfasst:
Empfangen einer Suchanfrage;
Durchsuchen der ersten Tabelle nach Einträgen, die mit der Suchanfrage übereinstimmen; und
Zurückgeben einer Mehrzahl von übereinstimmenden Einträgen, wobei das erste Element mindestens ein Segment umfasst, das mit einem entsprechenden der übereinstimmenden Einträge assoziiert ist.

12. Verfahren gemäß Anspruch 11, ferner umfassend:
Empfangen einer Auswahl eines Segments der übereinstimmenden Segmente; und
Zurückgeben einer Mehrzahl von Elementen, die das ausgewählte Segment enthalten.

13. Verfahren gemäß Anspruch 6, ferner umfassend:
Anzeigen einer Liste von Elementen, die ein Untersatz der Mehrzahl von Elementen ist, wobei die Liste von Elementen das erste Element umfasst und das erste Element eine erste Elementbezeichnung aufweist;
Anzeigen der ersten Mehrzahl von Segmenten;
Empfangen einer Anforderung, ein zweites Element anzuzeigen;
Speichern von Positionsinformationen, wobei die Positionsinformationen die Liste der Elemente, die erste Elementbezeichnung und einen Segment-Hash umfassen;
Anzeigen des zweiten Elements;
Laden der Positionsinformationen; und
Anzeigen des ersten Elements gemäß den Positionsinformationen.

14. Verfahren gemäß einem der Ansprüche 1-13, ferner umfassend:
Berechnen, auf der Verarbeitungsvorrichtung, einer Mehrzahl von Ähnlichkeiten zwischen Segmenten der Mehrzahl von Segmenten;
Clustern, auf der Verarbeitungsvorrichtung, der Mehrzahl von Segmenten in eine Mehrzahl von Clustern gemäß den berechneten Ähnlichkeiten, wobei jeder der Cluster eine Mehrzahl von ähnlichen Segmenten der Mehrzahl von Segmenten umfasst; und
Anzeigen eines Clusters aus der Mehrzahl von Clustern.

15. Verfahren gemäß einem der Ansprüche 1-14, ferner umfassend:
Identifizieren, auf der Verarbeitungsvorrichtung, eines übersetzten Segments in einer zweiten Sprache in einer Übersetzungstabelle gemäß einem entsprechenden Segment-Hash-Wert, wobei das identifizierte übersetzte Segment einem Segment in einer ersten Sprache der Mehrzahl von Segmenten entspricht; und
Anzeigen des identifizierten übersetzten Segments.

16. System zum Verarbeiten einer Mehrzahl von elektronischen Elementen, wobei jedes Element der elektronischen Elemente eine Dokumentdatei, eine Bilddatei, eine Audiodatei, eine Videodatei oder eine E-Mail ist, wobei das System umfasst:
eine Datenbank, die auf einem Computer läuft, wobei die Datenbank konfiguriert ist, um eine erste Tabelle und eine zweite Tabelle zu speichern;
eine Verarbeitungsvorrichtung, die für Folgendes konfiguriert ist:
Segmentieren jedes Elements in eine Mehrzahl von Segmenten, wobei jedes der Segmente eine logische Untereinheit des Elements ist, wobei jedes Element mit einer Artikelkennung assoziiert ist;
für jedes Segment der Mehrzahl von Segmenten:
Hashen des Segments, um einen Segment-Hash-Wert zu erzeugen;
Bestimmen, ob der Segment-Hash-Wert in einer ersten Tabelle vorhanden ist;
als Antwort auf ein Bestimmen, dass der Segment-Hash-Wert in der ersten Tabelle nicht existiert, Erstellen eines neuen Eintrags für das Segment in der ersten Tabelle, wobei der Eintrag den Segment-Hash-Wert mit dem Segment assoziiert; und
Hinzufügen eines Eintrags zu einer zweiten Tabelle, wobei der Eintrag die Artikelkennung und den Segment-Hash-Wert umfasst.

## Revendications

1. Un procédé de traitement d'une pluralité d'objets électroniques, chaque objet parmi les objets électroniques étant un fichier document, un fichier image, un fichier audio, un fichier vidéo ou un e-mail, le procédé comprenant :
pour chaque objet faisant partie des objets électroniques, chaque objet étant associé à un identifiant d'objet, le fait de segmenter, sur un dispositif de traitement comprenant un processeur et une mémoire, chaque objet en une pluralité de segments, chacun des segments étant une sous-unité logique de l'objet, et pour chaque segment faisant partie de la pluralité des segments :
le fait de hacher le segment pour produire une valeur de hachage de segment ;
le fait de déterminer si la valeur de hachage de segment existe dans une première table ;
en réponse à la détermination que la valeur de hachage de segment n'existe pas dans la première table, le fait de créer une nouvelle entrée pour le segment dans la première table, l'entrée associant la valeur de hachage de segment au segment ; et
le fait d'ajouter une entrée à une deuxième table, l'entrée comprenant l'identificateur d'objet, des métadonnées relatives au segment dans l'objet, et la valeur de hachage du segment, et
le fait de délivrer en sortie, depuis le dispositif de traitement, la première table et la deuxième table.

2. Le procédé selon la revendication 1, dans lequel la segmentation de chaque objet en une pluralité de segments comprend :
le fait de détecter un alias dans l'objet, l'alias étant une ou plusieurs chaînes de texte ou classe de chaînes particulières ; et
le fait de remplacer l'alias détecté par un nom canonique correspondant à l'alias.

3. Le procédé selon la revendication 2, dans lequel l'alias est l'un parmi un nom, une adresse, un numéro de téléphone, un nom de compte, un numéro de compte, une date, un numéro de carte de crédit, un numéro de sécurité sociale, une adresse électronique et une configuration défini par l'utilisateur.

4. Le procédé selon l'une quelconque des revendications 2 ou 3, dans lequel l'objet comprend du texte, le texte comprenant une pluralité de paragraphes, et dans lequel chaque segment faisant partie de la pluralité de segments correspond à l'un des paragraphes.

5. Le procédé selon l'une quelconque des revendications 1 à 4, dans lequel l'objet comprend une image et dans lequel le hachage de l'image comprend :
le fait de mettre l'image à l'échelle pour avoir une première dimension égale à une taille d'image normalisée ;
le fait de remplir l'image pour avoir une deuxième dimension égale à la taille normalisée de l'image ; et
le fait de calculer la valeur de hachage de segment de l'image mise à l'échelle et remplie.

6. Le procédé selon l'une quelconque des revendications 1 à 5 comprenant en outre :
le fait de recevoir, sur un dispositif de traitement, une demande d'affichage d'un premier objet parmi les objets ;
le fait de récupérer, depuis la deuxième table, une première liste de segments associés au premier objet,
le fait de récupérer, depuis la première table, une première pluralité de segments correspondant à la première liste de segments ; et
le fait de délivrer en sortie la première pluralité de segments.

7. Le procédé selon la revendication 6, comprenant en outre :
le fait de recevoir une demande d'étiquetage d'un premier segment faisant partie de la première pluralité de segments du premier objet avec une étiquette ;
le fait de stocker l'étiquette dans une entrée associée au premier segment ; et
le fait de stocker l'entrée dans une table d'étiquettes.

8. Le procédé selon la revendication 7, dans lequel l'étiquette stockée dans l'entrée de la table d'étiquettes est une indication que le premier segment a été examiné.

9. Le procédé selon la revendication 7, comprenant en outre :
le fait de charger, à partir de la base de données, une deuxième pluralité de segments associés à un deuxième objet parmi les objets, la deuxième pluralité de segments comprenant le premier segment,
le fait de charger l'entrée associée au premier segment ; et
le fait d'afficher la deuxième pluralité de segments et l'étiquette stockée dans l'entrée associée au premier segment.

10. Le procédé selon la revendication 6, dans lequel chacun des segments a un horodatage et dans lequel la requête comprend en outre une requête pour afficher un deuxième objet faisant partie des objets, le procédé comprenant en outre :
le fait de récupérer le deuxième objet ;
le fait d'agréger les segments du premier objet et les segments du deuxième objet ;
le fait de trier les segments agrégés par horodatage ;
le fait de supprimer les segments en double pour produire une liste réduite de segments ; et
le fait d'afficher la liste réduite des segments, triés par horodatage.

11. Le procédé selon la revendication 6, comprenant en outre :
le fait de rechercher la pluralité d'objets, ce fait de rechercher comprenant :
le fait de recevoir une requête de recherche ;
le fait de rechercher dans la première table des entrées répondant à la requête de recherche ; et
le fait de retourner une pluralité d'entrées répondantes, le premier objet comprenant au moins un segment associé à une entrée répondante parmi les entrées répondantes.

12. Le procédé selon la revendication 11, comprenant en outre
le fait de recevoir une sélection d'un segment faisant partie des segments répondants ; et
le fait de retourner une pluralité d'objets contenant le segment sélectionné.

13. Le procédé selon la revendication 6, comprenant en outre :
le fait d'afficher une liste d'objets formant un sous-ensemble de la pluralité d'objets, la liste d'objets comprenant le premier objet, et le premier objet ayant un premier identifiant d'objet ;
le fait d'afficher la première pluralité de segments ;
le fait de recevoir une demande d'affichage d'un deuxième objet ;
le fait d'enregistrer des informations de position, les informations de position comprenant la liste des objets, l'identifiant du premier objet et un hachage de segment ;
le fait d'afficher le deuxième objet ;
le fait de charger l'information de position ; et
le fait d'afficher le premier objet conformément aux informations de position.

14. Le procédé selon l'une quelconque des revendications 1 à 13 comprenant en outre :
le fait de calculer, sur le dispositif de traitement, une pluralité de similitudes entre les segments faisant partie de la pluralité de segments ;
le fait de regrouper, sur le dispositif de traitement, la pluralité de segments en une pluralité de groupes conformément aux similitudes calculées, chacun des groupes comprenant une pluralité de segments similaires faisant partie de la pluralité de segments ; et
le fait d'afficher un groupe faisant partie de la pluralité de groupes.

15. Le procédé de mise en œuvre d'une des revendications 1 à 14 comprenant en outre :
le fait d'identifier, sur le dispositif de traitement, un segment traduit dans une deuxième langue dans une table de traduction conformément à une valeur de hachage de segment correspondante, le segment traduit identifié correspondant à un segment dans une première langue de la pluralité de segments ; et
le fait d'afficher le segment traduit identifié.

16. Un système pour traiter une pluralité d'objets électroniques, chaque objet faisant partie des objets électroniques étant un fichier document, un fichier image, un fichier audio, un fichier vidéo ou un e-mail, le système comprenant :
une base de données s'exécutant sur un ordinateur, la base de données étant configurée pour stocker une première table et une deuxième table ;
un dispositif de traitement configuré pour :
segmenter chaque objet en une pluralité de segments, chacun des segments étant une sous-unité logique de l'objet, chaque objet étant associé à un identifiant d'objet ;
pour chaque segment faisant partie de la pluralité de segments :
le fait de hacher le segment pour produire une valeur de hachage de segment ;
le fait de déterminer si la valeur de hachage de segment existe dans une première table ;
en réponse à la détermination que la valeur de hachage de segment n'existe pas dans la première table, le fait de créer une nouvelle entrée pour le segment dans la première table, l'entrée associant la valeur de hachage de segment avec le segment ; et
le fait d'ajouter une entrée dans la deuxième table, l'entrée comprenant l'identificateur d'objet et la valeur de hachage de segment.
